# FASCICULE DE BREVET EUROPEEN

(11) **EP 2 203 834 B1**
(45) Date de publication et mention de la délivrance du brevet: **09.03.2011**
(21) Numéro de dépôt: 08862749.2
(22) Date de dépôt: 29.09.2008
(51) Int. Cl.: G06F 13/10

(54) **PROCÉDÉ ET DISPOSITIF DE GESTION DE DONNÉES D'APPLICATION DANS UN SYSTÈME NFC**
VERFAHREN UND VORRICHTUNG ZUR VERWALTUNG VON ANWENDUNGSDATEN IN EINEM NFC-SYSTEM
METHOD AND DEVICE FOR MANAGING APPLICATION DATA IN A NFC SYSTEM

(30) Priorité: 27.09.2007 FR 0706779; 27.09.2007 FR 0706778
(43) Date de publication de la demande: 07.07.2010
(73) Titulaire: Inside Contactless, 13856 Aix-en-Provence Cedex 3 (FR)
(72) Inventeur: CHARRAT, Bruno, F-13090 Aix en Provence (FR)
(74) Mandataire: Marchand, André
(86) Numéro de dépôt international: PCT/FR2008/001351
(87) Numéro de publication internationale: WO 2009/077664

(56) Documents cités:
- EP-A- 1 327 222
- AU-A1- 2006 200 187
- AU-B2- 718 196
- US-A1- 2005 006 469
- US-A1- 2006 136 902

## Description

La présente invention concerne un procédé de gestion de données d'application dans un système NFC embarqué ou destiné à être embarqué dans un objet portatif et comprenant une interface d'émission/réception de données sans contact, un ou plusieurs processeur(s) hôte(s) et un processeur de routage ou de transfert de données pour réaliser des actions de routage ou de transfert de données d'application entre l'interface d'émission/réception de données sans contact et le(s) processeur(s) hôte(s).

La technologie NFC est actuellement développée par un consortium industriel regroupé sous le nom de Forum NFC (http://www.nfc-forum.org). Elle est dérivée à la technologie RFID ("Radio Frequency IDentification") et utilise des composants NFC présentant plusieurs modes de fonctionnement, notamment un mode "lecteur" (Reader Mode) et un mode "émulation de carte".

Dans le mode "lecteur", un composant NFC fonctionne comme un lecteur RFID conventionnel pour accéder en lecture ou écriture à une puce RFID (carte à puce ou étiquette sans contact). Il émet un champ magnétique, envoie des données à la puce RFID par modulation de l'amplitude du champ magnétique et reçoit des données de la puce RFID par modulation de charge et couplage inductif. Ce mode est également qualifié de mode actif, puisque dans ce mode le composant émet un champ magnétique.

Dans le mode "émulation", décrit dans le brevet Européen publié sous le numéro EP 1 327 222.au nom de la demanderesse, un composant NFC, fonctionne de façon passive à la manière d'un transpondeur pour dialoguer avec un autre lecteur et être vu par l'autre lecteur comme une puce RFID. Le composant n'émet pas de champ magnétique, reçoit des données en démodulant un champ magnétique émis par l'autre lecteur et émet des données vers cet autre lecteur par modulation de l'impédance de son circuit d'antenne (modulation de charge). Ce mode est également qualifié de mode passif, puisque dans ce mode le composant n'émet pas de champ magnétique.

D'autres modes de communication peuvent être mis en oeuvre, notamment un mode "device" où un composant NFC doit s'apparier avec un autre composant se trouvant dans le même mode de fonctionnement, chaque composant se plaçant alternativement dans un état passif (sans émission de champ) pour recevoir des données et dans un état actif (avec émission de champ) pour émettre des données.

En sus de ces divers modes de fonctionnement, un composant NFC peut mettre en oeuvre plusieurs protocoles de communication sans contact, par exemple ISO 14443-A, ISO 14443-B, ISO 15693, Felica®, etc. Chaque protocole définit une fréquence d'émission du champ magnétique, une méthode de modulation de l'amplitude du champ magnétique pour émettre des données en mode actif, et une méthode de modulation de charge par couplage inductif pour émettre des données en mode passif. Un composant NFC peut donc être un dispositif multimode et multiprotocole. La demanderesse commercialise par exemple un composant NFC sous la désignation "MicroRead".

En raison de ses capacités de communication étendues, un composant NFC est destiné à être intégré dans des dispositifs portatifs tels que des téléphones portables ou des Assistants Numériques Personnels (autrement appelés PDA, ou "Personal Digital Assistant").

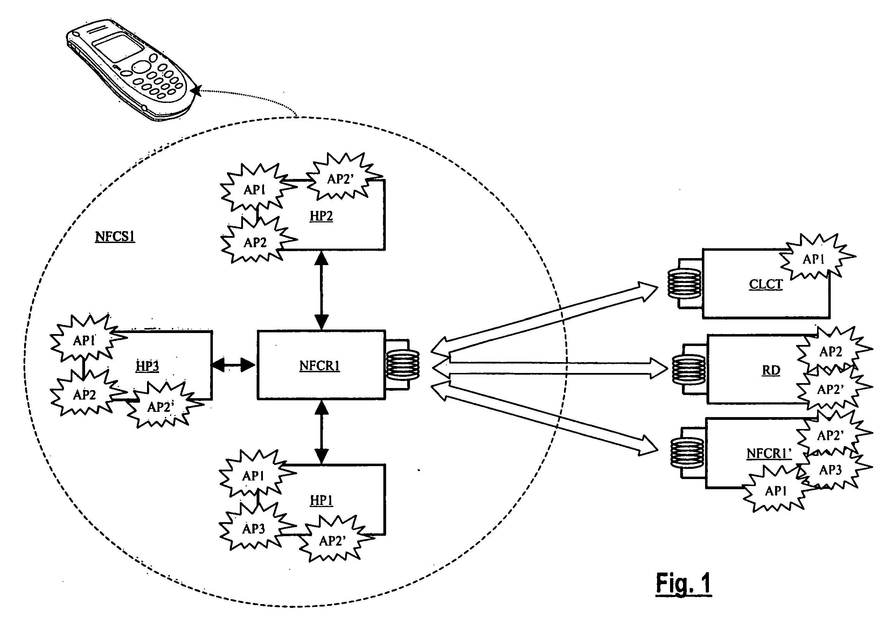

On est donc amené à réaliser un système NFC du type représenté en figure 1 sous la référence NFCS1. Le système NFCS1 comprend un composant NFC désigné "NFCR1" et au moins un premier processeur hôte HP1. On entend par "processeur hôte" tout circuit intégré comprenant un microprocesseur ou un microcontrôleur et qui est connecté à un port du composant NFC. Dans de nombreuses applications, le système NFC comprend également un deuxième processeur hôte HP2, voire un troisième processeur hôte HP3.

Le processeur hôte HP1 est le processeur principal du dispositif dans lequel le composant NFC est embarqué. C'est généralement un processeur d'application non sécurisé, par exemple le circuit de bande de base d'un téléphone mobile (circuit "baseband" ou circuit de radiotéléphonie) et celui-ci contrôle divers éléments périphériques du téléphone, notamment le clavier, l'afficheur, le microphone, l'écouteur etc. Le deuxième processeur hôte HP2 peut être un circuit sécurisé, par exemple le processeur sécurisé d'une carte SIM ("Subscriber Identification Module") délivrée par un opérateur de téléphonie mobile et comportant un identifiant d'abonné. Le troisième processeur hôte HP3. peut être également un circuit sécurisé délivré par un autre fournisseur de service, par exemple pour des applications de paiement sécurisé. Un tel processeur comporte également un identifiant d'utilisateur du service.

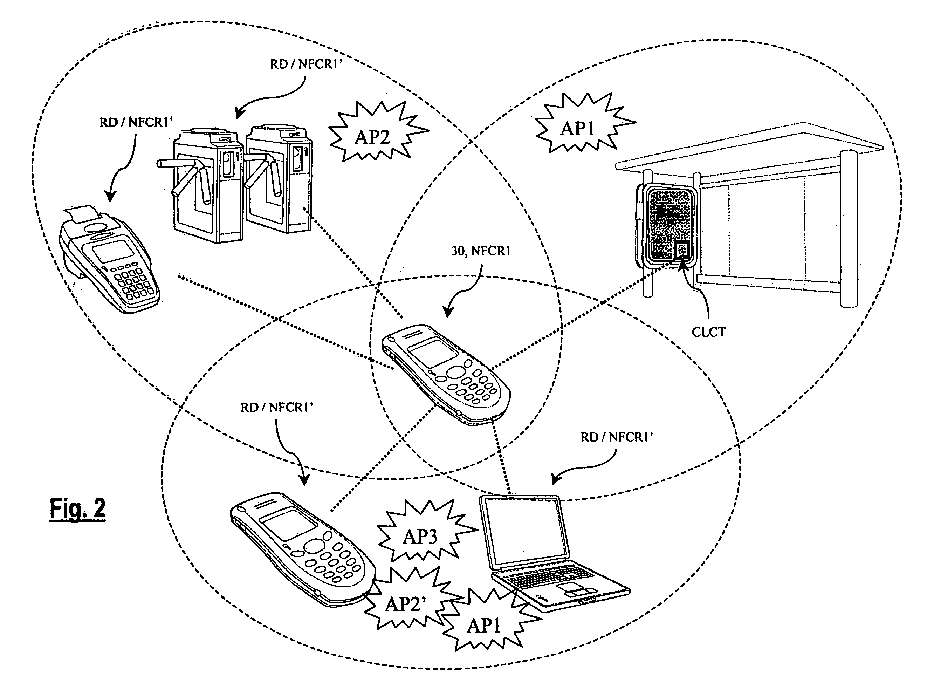

Les ressources du composant NFC sont mises à la disposition des processeurs HP1, HP2 et HP3 pour leur permettre de gérer des applications sans contact. Des exemples d'application sont illustrés sur la figure 2 qui représente un téléphone mobile 30 équipé du système NFCS1 de la figure 1. On distingue ici:
1) des applications A*P1 dans lesquelles le composant NFCR1 du téléphone mobile 30 est en mode lecteur pour communiquer en lecture et/ou écriture avec un circuit intégré sans contact CLCT ou avec un composant NFCR1' en mode émulation de carte. Le téléphone mobile est dans ce cas utilisé comme un lecteur NFC. Ce type d'application peut être gratuit et consister par exemple en une lecture de données publicitaires insérées dans un affichage publicitaire d'une aubette. L'application peut aussi être payante et consister par exemple en une lecture d'informations réservées à des abonnés. Le programme de l'application AP1 peut être détenu et exécuté par le processeur HP1 si le service est gratuit ou détenu et exécuté par l'un des processeurs HP2 ou HP3 s'il est payant car il nécessite alors une identification de l'abonné ou de l'utilisateur.
2) des applications sécurisées AP2 dans lesquelles le composant NFCR1 du téléphone 30 est en mode émulation de carte pour être lu par un lecteur conventionnel RD ou par un autre composant NFCR1', dans des applications de paiement ou de contrôle d'accès payant (machine de paiement, entrée de métro, etc.). Le téléphone mobile30 est alors utilisé comme une carte à puce. Le programme de l'application AP2 est de préférence détenu et exécuté par le processeur sécurisé HP2 ou HP3, comme représenté en figure 1, car l'accès au service nécessite une identification de l'abonné ou de l'utilisateur.
3) des applications non sécurisées AP2' dans lesquelles le composant NFCR1 est également en mode émulation de carte pour être lu par des lecteurs RD conventionnels ou un autre composant NFCR1'. Le téléphone mobile 30 est alors également utilisé comme une carte à puce mais le programme de l'application AP2' peut être détenu et exécuté par le processeur non sécurisé HP1 ou par les processeurs HP2, HP3 (les fournisseurs de services payant pouvant proposer des applications gratuites).
4) des applications AP3 dans lesquelles le composant NFCR1 du téléphone 30 est en mode "device" et dialogue avec un composant NFCR1' embarqué dans un autre téléphone mobile ou dans un ordinateur. Ce type d'application est généralement gratuit et permet de transférer des paquets de données d'un dispositif à l'autre (transfert de fichiers en point à point notamment). Le programme de l'application AP3 est de préférence détenu et exécuté par le processeur non sécurisé HP1, comme illustré en figure 1, qui dispose d'une puissance de calcul supérieure à celle du processeur sécurisé HP2 si celui-ci est un processeur de carte SIM ou supérieure à celle du processeur sécurisé HP3.

Ainsi, la réalisation d'un système NFC implique le routage ou à tout le moins le transfert, au sein du système NFC, de données émises par les processeurs HP1, HP2, HP3 et devant être acheminées au composant NFC (données sortantes émises via le canal de transmission de données sans contact), et réciproquement le routage ou le transfert de données reçues par le composant NFC et devant être acheminées à l'un des processeurs HP1, HP2, HP3 (données entrantes reçues via le canal de transmission de données sans contact).

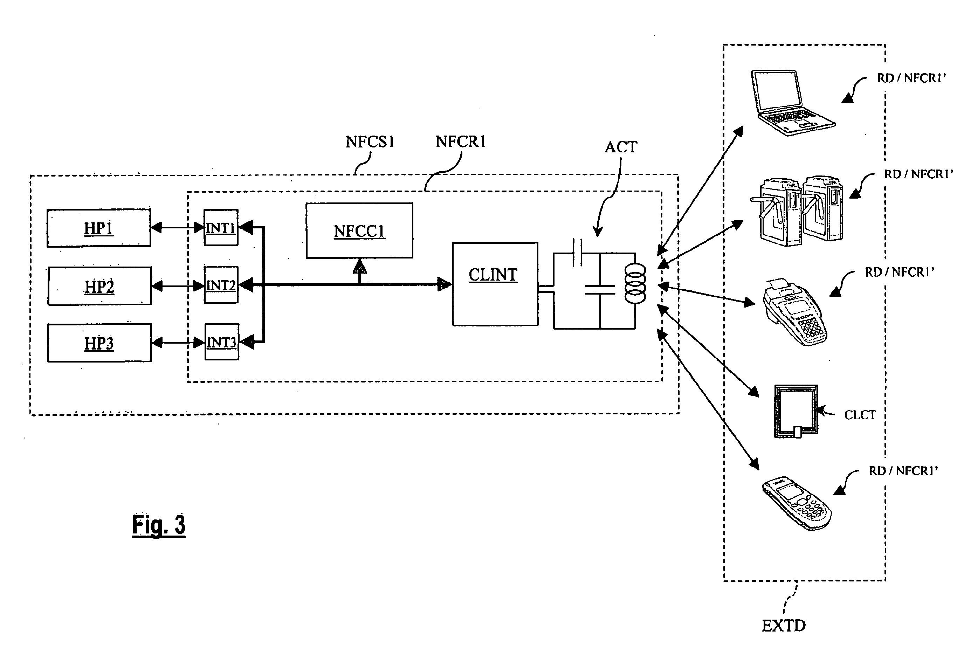

La figure 3 représente schématiquement un exemple d'architecture du composant NFCR1 au sein du système NFCS1. Le composant NFCR1 comprend une interface CLINT d'émission/réception de données sans contact équipée d'un circuit d'antenne ACT, des interfaces de communication filaires INT1, INT2, INT3 reliées à l'interface CLINT, et un processeur de routage ou de transfert de données NFCC1. L'interface INT1 est connectée au processeur hôte HP1, l'interface INT2 connectée au processeur hôte HP2 et l'interface INT3 connectée au processeur hôte HP3.

En face du composant NFCR1 est représenté un dispositif externe EXTD. Ce dispositif externe peut être un composant NFCR1' ou un lecteur RD conventionnel agencé dans un ordinateur, une borne de paiement, un téléphone mobile, etc., ou une puce sans contact CLCT et son circuit d'antenne agencés sur un support tel une carte plastique ou en papiers, une étiquette électronique, etc. Lorsqu'une transaction NFC est engagée entre le système NFCS1 et le dispositif externe EXTD, le processeur NFCC1 assure le routage ou le transfert à un processeur hôte, HP1-HP3 des données d'application lues dans ou fournies par le dispositif externe EXTD, ces données étant reçues par l'intermédiaire de l'interface CLINT. Le processeur NFCC1 assure également le routage ou le transfert de données au dispositif externe EXTD, via l'interface CLINT, de données d'application émises par un processeur hôte HP1-HP3.

Le document US 2006/136902 décrit un téléphone mobile comprenant une interface RFID pour capturer des données appelées "field data" et configuré pour envoyer ensuite à un serveur une information appelée "event tracking information" incluant les "field data", afin de gérer une méthode commerciale. Le téléphone reçoit également une machine d'états sous forme de programme compressé, et décompresse ce programme pour exécuter les fonctionnalités de la machine d'état prévues en relation avec des étapes de la méthode commerciale.

Au vu de l'état de la technique, il peut être souhaité d'améliorer le traitement des données d'application dans un système NFC afin d'améliorer les fonctionnalités offertes par les systèmes NFC aux utilisateurs .

A titre d'exemple, certaines puces RFID (par exemple CLCT sur la figure 3) sont équipées d'une mémoire à bas coût et de capacité limitée et ne peuvent donc contenir qu'une faible quantité d'informations. Il existe notamment des puces RFID ne contenant que 48 octets de données, de sorte que les données d'application pouvant être lues par un système NFC dans ce type de puce sont réduites. Cela réduit d'autant les possibilités d'exploitation ou de présentation de ces données par le processeur hôte qui les reçoit et les traite au sein du système NFC.

Comme autre exemple des limitations, actuelles des systèmes NFC, lorsque des données sont échangées entre un processeurs hôte du système NFC et un dispositif externe, EXTD., il n'y a généralement pas de trace enregistrée des échanges effectués si le processeur hôte destinataire ou émetteur des données échangées n'est pas le processeur d'application principal du système NFC, par exemple le processeur HP1 en figure 3. Il peut exister en pratique une connexion directe entre le processeur HP1 et l'un des processeurs HP2, HP3, par exemple un bus ISO 7816, qui n'est pas représentée sur la figure 3, mais les fournisseurs de services qui contrôlent les fonctionnalités des processeurs hôtes ont limité les possibilités d'exploitation de cette connexion de sorte que les possibilités d'échange d'information entre les processeurs sont réduites. Ainsi un processeur HP2 ou HP3 peut échanger des données d'application avec un dispositif externe via l'interface CLINT sans que le processeur HP1 en soit informé.

Un mode de réalisation de l'invention concerne un procédé de gestion de données d'application dans un système NFC embarqué ou destiné à être embarqué dans un objet portatif et comprenant une interface d'émission/réception de données sans contact, un ou plusieurs processeur(s) hôte(s) et un processeur de routage ou de transfert de données pour réaliser des actions de routage ou de transfert de données d'application entre l'interface d'émission/réception de données sans contact et le(s) processeur(s) hôte(s), procédé comprenant les étapes consistant à générer des données d'application internes en réponse à la réalisation d'un événement interne au sein du système NFC, et fournir les données d'application internes à un processeur hôte du système NFC;
les données d'application interne sont générées de manière à former une commande exécutable par le processeur hôte auquel elles sont fournies.

Selon un mode de réalisation, les données d'application internes sont générées dans un format déterminé pour simuler des données qui seraient lues dans ou fournies par un composant externe via un canal de communication sans contact.

Selon un mode de réalisation, le procédé comprend les étapes consistant à : recevoir un signal d'horloge, - générer un événement interne à partir du signal d'horloge, et en réponse à la survenance de l'événement interne, fournir les données d'application internes à un processeur hôte du système NFC.

Selon un mode de réalisation, le procédé comprend les étapes consistant à configurer un premier processeur hôte du système NFC pour qu'il émette une requête interne valant événement interne, et en réponse à l'émission de la requête, fournir les données d'application internes à un second processeur hôte du système NFC.

Selon un mode de réalisation, le procédé comprend une étape d'envoi des données d'application internes à un serveur externe, par le processeur hôte à qui elles ont été fournies.

Selon un mode de réalisation, les données d'application internes comprennent ou forment une clé de sécurité.

Selon un mode de réalisation, les données d'application internes simulent une commande RFID.

Selon un mode de réalisation, le procédé comprend l'étape consistant à générer les données d'application internes au moyen d'une fonction de cryptographie.

Un mode de réalisation de l'invention concerne également un dispositif de gestion de données d'application intégré ou destiné à être intégré dans un objet portatif, et prévu pour former avec un ou plusieurs processeur(s) hôte(s) un système de communication de type NFC embarqué dans l'objet portatif, comprenant une interface d'émission/réception de données sans contact de type NFC et un processeur de routage ou de transfert de données pour réaliser des actions de routage ou de transfert de données d'application entre l'interface d'émission/ réception de données sans contact et le(s) processeur(s) hôte, dispositif dans lequel le processeur de routage ou de transfert de données est configuré pour générer, au sein du système NFC, des données d'application internes en réponse à la réalisation d'un événement interne au sein du système NFC, et fournir les données d'application internes à un processeur hôte du système NFC;
le processeur de routage ou de transfert de données est configuré pour générer des données d'application internes formant une commande exécutable par le processeur hôte auquel elles sont fournies.

Selon un mode de réalisation, le processeur de routage ou de transfert de données est configuré pour générer les données d'application internes dans un format déterminé pour simuler des données qui seraient lues dans ou fournies par un composant externe via un canal de communication sans contact.

Selon un mode de réalisation, le processeur de routage ou de transfert de données est configuré pour recevoir un signal d'horloge, générer un événement interne à partir du signal d'horloge, et en réponse à la survenance de l'événement interne, fournir les données d'application internes à un processeur hôte du système NFC.

Selon un mode de réalisation, le processeur de routage ou de transfert de données est configuré pour recevoir une requête interne valant événement interne de la part d'un premier processeur hôte du système NFC, et en réponse à la réception de la requête, fournir les données d'application internes à un second processeur hôte du système NFC.

Selon un mode de réalisation, le processeur de routage ou de transfert de données est configuré pour générer des données d'application internes comprenant ou formant une clé de sécurité.

Selon un mode de réalisation, le processeur de routage ou de transfert de données est configuré pour générer des données d'application internes qui simulent une commande RFID.

Selon un mode de réalisation, le processeur de routage ou de transfert de données est configuré pour générer des données d'application internes au moyen d'une fonction de cryptographie.

Un mode de réalisation de l'invention concerne également un système NFC comprenant un dispositif de gestion de données d'application du type décrit ci-dessus, et au moins un processeur hôte connecté au dispositif.

Un mode de réalisation de l'invention concerne également un objet portatif électronique, notamment téléphone portable, comprenant un système NFC du type décrit ci-dessus.

Des exemples de réalisation de l'invention seront exposés dans ce qui suit à titre non limitatif, en relation avec les figures jointes parmi lesquelles :
- la figure 1 précédemment décrite représente sous forme de blocs une architecture classique de système NFC, et des éléments externes avec lesquels ce système NFC peut dialoguer,
- la figure 2 précédemment décrite illustre diverses applications d'un système NFC intégré dans un téléphone mobile,
- la figure 3 précédemment décrite représente sous forme de blocs l'architecture classique d'un composant NFC présent dans le système NFC de la figure 1,
- la figure 4 illustre de façon schématique un système NFC dans lequel sont mis en oeuvre des modes de réalisation du procédé de gestion de données selon l'invention;
- les figures 5 à 7 représentent des séquences d'échange de données entre des éléments du système NFC de la figure 4 et illustrent des modes de réalisation de l'invention,
- la figure 8 représente un exemple d'architecture matérielle d'un composant NFC présent dans le système NFC de la figure 4, et
- la figure 9 représente un exemple d'architecture logicielle du composant NFC de la figure 8.

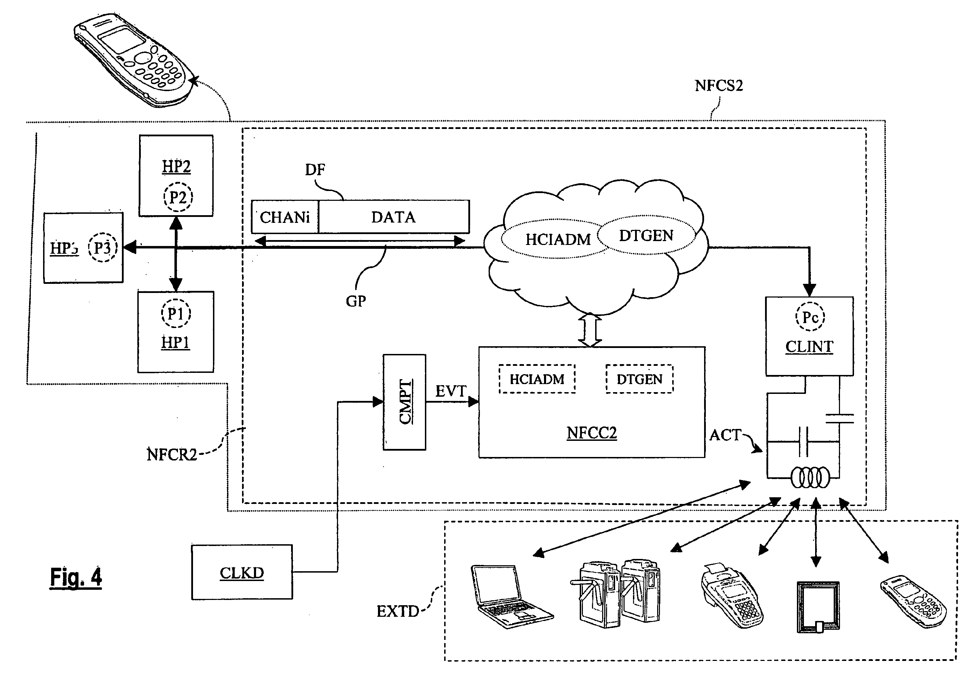

La figure 4 illustre de façon schématique un système NFC désigné "NFCS2" dans lequel est mis en oeuvre un mode de réalisation du procédé de gestion de données selon l'invention. L'architecture du système NFCS2 représentée ici ne constitue qu'un exemple au sein duquel l'invention est mise en oeuvre. Toujours à titre d'exemple, on considère ici que le système NFC est intégré dans un téléphone mobile, représenté schématiquement sur la figure 4.

Le système NFCS2 comprend un composant NFC désigné "NFCR2" et des processeurs hôtes HP1, HP2, HP3 ou "processeurs d'application" car supposés capables chacun d'assurer des transactions NFC ou de participer à de telles transactions. Le composant NFCR2 comprend un processeur NFCC2 et une interface d'émission/réception de données sans contact CLINT équipée d'un circuit d'antenne ACT.

Le processeur hôte HP1 est ici le processeur principal du système NFCS2. Il s'agit du processeur de radiotéléphonie (processeur "bande de base") du téléphone mobile. Le processeur hôte HP1 contrôle le circuit de radiotéléphonie du téléphone mobile et divers éléments périphériques du téléphone, tels un écran d'affichage, un clavier, un écouteur, un microphone, etc., qui n'ont pas été représentés dans un souci de simplicité. Il est supposé ici que le processeur HP1 est capable de se connecter au réseau Internet via le circuit de radiotéléphonie ou une éventuelle, interface WiFi ou Bluetooth®, cette fonctionnalité étant présente dans la majorité des téléphones mobiles de dernière génération.

Le processeur hôte HP2 et le processeur hôte HP3 sont ici des circuits sécurisés, par exemple une carte SIM et une puce de carte bancaire.

Dans cet exemple, le composant NFCR2 comprend un organe de routage HCIADM ("Administrateur HCI") mettant en oeuvre un protocole de routage dit "HCI" ("Host Controller Interface"). L'organe de routage HCIADM assure la création de chemins de données ou canaux de routage pour l'acheminement de données au sein du système NFC. L'organe de routage HCIADM est par exemple une fonction logicielle exécutée par le processeur NFCC2, qui est ainsi utilisé comme processeur de routage ou de transfert de données au sein du système NFC. L'action de l'organe de routage HCIADM sur le transfert de données entre l'interface CLINT et les processeurs hôtes HP1, HP2, HP3 ou sur le transfert de données entre les processeurs HP1 à HP3 est représenté schématiquement par une sorte de "nuage" agencé sur un chemin de données global GP du système NFC. Ce chemin de données global est contrôlé par l'organe HCIADM et relie l'interface CLINT aux processeurs hôtes HP1-HP3, ainsi que les processeurs hôtes entre eux.

L'organe HCIADM crée un chemin de données particulier au sein du chemin de données global en lui attribuant un numéro de canal de routage CHANi après qu'une demande de création d'un chemin de données a été émise par un processeur d'application, ou après établissement par l'interface CLINT d'une liaison avec un dispositif externe EXTD à la demande du dispositif externe (les transactions pouvant être initiées soit par les processeurs hôtes soit par le dispositif externe). Le protocole HCI mis en oeuvre ici utilise des trames de données de type {CHANi; DATA} comprenant un champ d'en-tête comportant un numéro de canal de routage CHANi et un champ de données contenant des données d'application DATA. Sur la figure 4, des points source ou destination d'un flux de données dans le système NFC sont désignés P1 (point localisé dans le processeur hôte HP1), P2 (point localisé dans le processeur hôte HP2), P3 (point localisé dans le processeur hôte HP3) et Pc (point localisé dans l'interface sans contact CLINT).

Il sera noté que la manière dont le routage est effectué ainsi que l'architecture de système NFC décrite ici ne constituent que le contexte de mise en oeuvre du mode de réalisation du procédé de l'invention qui va être décrit dans ce qui suit. Des modes de réalisation du procédé de l'invention peuvent également être mis en oeuvre dans un système NFC sans routage de données, ne comprenant par exemple que des tampons d'échange de données pour assurer le transfert interne de données sans génération de canaux de routage et sans utilisation de trames de routage. Ainsi, dans ce qui suit, le terme "routage" peut aussi désigner un simple transfert de données d'un point à un autre au sein du système NFC.

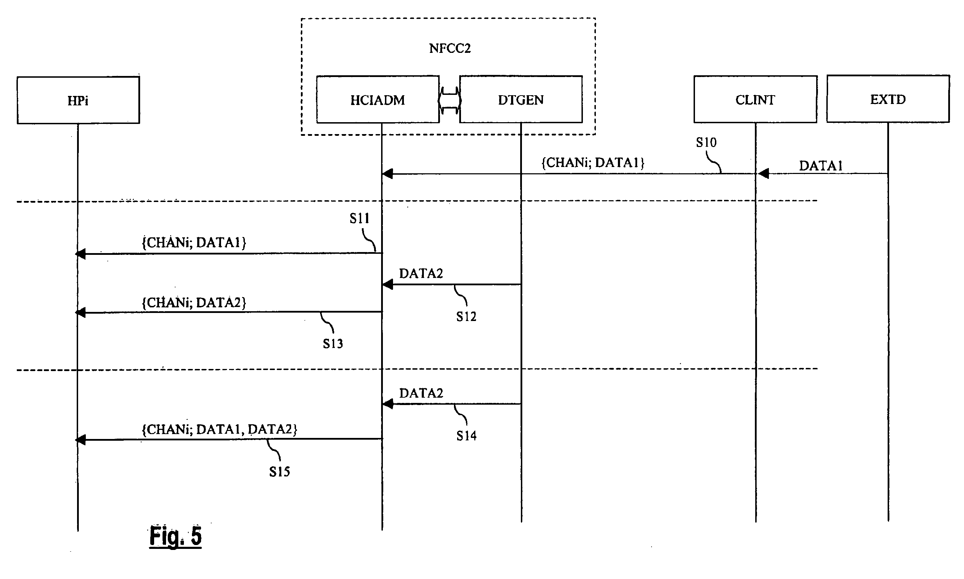

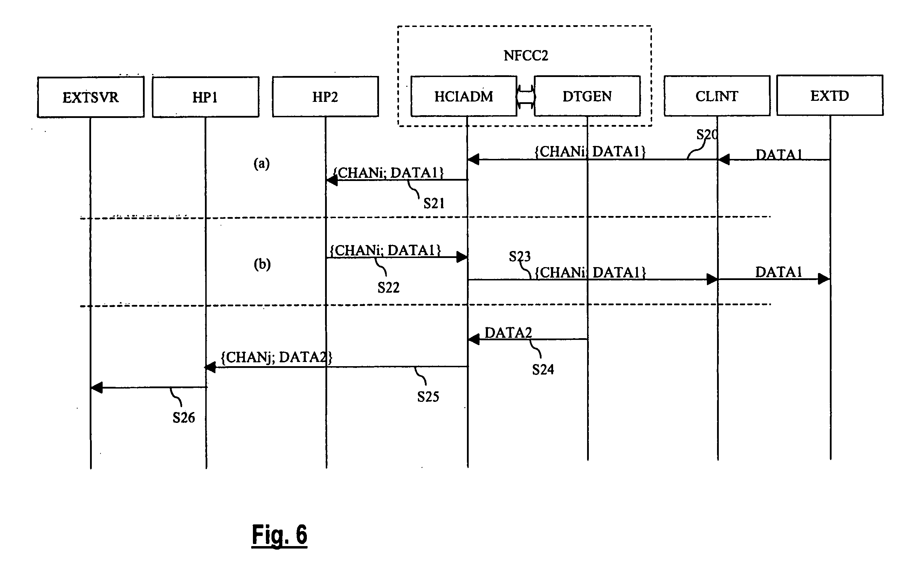

L'interface CLINT peut aussi être prévue comme un élément faisant partie intégrante du processeur NFCC2 et entièrement sous le contrôle de celui-ci, et non comme un point source ou destination Pc distinct du processeur NFCC2. Dans ce cas, le processeur NFCC2 assure la gestion du protocole de communication sans contact. L'interface CLINT ne comprend que des éléments matériels de communication sans contact et ne peut pas se comporter comme un périphérique intelligent capable de répondre ou de générer des commandes de routage. Si une telle option de conception est retenue, la figure 4 ainsi que les figures 5, 6 décrites plus loin sont modifiées de manière à représenter l'interface CLINT et le point de routage Pc à l'intérieur du bloc représentant le processeur NFCC2.

### Exemples de premier et second modes de réalisation

Des premier et second modes de réalisation du procédé de gestion de données selon l'invention sont mis en oeuvre en prévoyant, dans le composant NFCR2, un organe de génération de données d'application complémentaires désigné "DTGEN" sur la figure 4. A l'instar de l'organe de routage HCIADM, l'organe DTGEN est par exemple une fonction ou "couche" logicielle qui est exécutée par le processeur NFCC2 et s'appuie sur les interfaces matérielles du processeur. L'organe DTGEN et l'organe HCIADM peuvent par ailleurs ne former qu'une seule entité logicielle, la distinction entre chacun des organes-étant faite ici essentiellement dans le but de distinguer les caractéristiques de l'invention des caractéristiques classiques de routage ou de transfert de données.

On appelle ici "données d'application externes" DATA1 des données qui sont transmises ou reçues via l'interface sans contact CLINT. En réponse à une action de routage de données d'application externes DATA1, des données d'application complémentaires DATA2 sont générées par l'organe DTGEN. Ces données complémentaires DATA2, si elles sont destinées au même point destination que les données DATA1, peuvent être combinées aux données DATA1. Une telle combinaison peut comprendre une opération de concaténation ou une opération de mélange des données complémentaires DATA2 et des données d'application DATA1, ou les deux opérations à la fois.

Le résultat de la combinaison peut être incorporé dans une même trame de routage, du type :
{CHANi ; DATA1, DATA2}

Si les données complémentaires sont destinées à un autre point de destination que les données DATA1, elles peuvent par contre être intégrées dans une autre trame de routage, du type :
{CHANj ; DATA2},
dans laquelle le canal de routage CHANj est différent du canal de routage CHANi.

Les données d'application complémentaires. DATA2 sont de façon générale des données exploitables par l'un des processeurs d'application HP1, HP2, HP3 pour exécuter une action déterminée, soit sous forme de paramètres permettant de définir complètement l'action à exécuter, soit sous forme d'au moins une partie des instructions formant l'action à exécuter.

### Premier mode de réalisation

Selon ce mode de réalisation de l'invention, les données d'application complémentaires DATA2 sont générées par l'organe DTGEN pour enrichir les données d'application DATA1 et sont transmises avec elles à l'élément destinataire des données DATA1. Lorsque l'élément destinataire est un processeur d'application du système NFC, l'ajout des données complémentaires DATA2 aux données initiales DATA1 permet au processeur d'application de réaliser des actions plus complexes que celles qu'il aurait pu faire en recevant simplement les données DATA1. Ceci permet par exemple de réaliser de telles actions à partir de données élémentaires lues dans ou fournies par des puces ou des étiquettes RFID à faible coût dont la capacité mémoire est insuffisante pour enregistrer des commandes correspondant à ces actions.

Par exemple, lorsque les données DATA1 sont destinées au processeur principal HP1 en tant que processeur d'application et comportent une information brute destinée à être affichée sur un écran d'un dispositif comprenant le système de communication NFC, ici l'écran du téléphone mobile, telle que les mots "Hello world", les données d'application complémentaires DATA2 peuvent être "<b>" d'une part et "</b>" d'autre part. Les données DATA2 sont concaténées avec les données "Hello world" de manière à former la commande suivante :
<b>Hello world</b>
qui est codée html et signifie que tout ce qui est entre les balises <b> doit être mis en gras ("bold"). Ainsi, sur réception de cette instruction, le processeur HP1 affiche les mots "Hello world" en caractères gras.

L'affichage de données DATA1 peut également être amélioré en ajoutant des données DATA2 qui conduisent (dans le sens de "causer") le processeur d'application à se connecter à un serveur externe EXTSVR pour y recevoir des instructions d'affichage. En reprenant l'exemple précédent, où les données DATA1 sont "Hello world", les données complémentaires sont par exemple :
http://www.insidefr.com/parser.php?display=
et sont concaténées avec les données DATA1 pour former l'instruction suivante :
http://www.insidefr.com/parser.php?display=Hello world

La commande obtenue est une redirection vers le site web "insidefr.com" et un appel à la fonction "parser.php" pour l'exécution de la fonction d'affichage "display". La fonction parser.php renvoie par exemple une commande au processeur HP1 pour que celui-ci affiche un menu ou une publicité, un fond d'écran, etc. pendant l'affichage de "Hello world". Le processeur HP1 peut également recevoir du serveur web des commandes d'affichage assurant un affichage sur l'écran de meilleure qualité (police, couleur, positionnement du texte, etc.).

Un autre exemple d'application vise le téléchargement automatique d'un fichier sonore en se basant uniquement sur des données DATA1 comportant par exemple un numéro de série. Dans ce cas, des données DATA1 "call 61321" lues dans une puce RFID peuvent être complétées par les données DATA2 suivantes :
"http://www.insidefr.com/parser.php?load=",
pour former une instruction complète de téléchargement de sonnerie :
"http://www.insidefr.com/parser.php?load=61321".

L'utilisateur n'a donc pas besoin d'appeler lui-même le numéro à partir duquel le téléchargement doit se faire. Ainsi, en lisant des données élémentaires dans une puce ou dans une étiquette RFID ("tag"), le procédé permet de générer des commandes sophistiquées qui sont exécutées par le processeur d'application.

Encore un autre exemple d'application permet d'améliorer l'affichage d'une information sans nécessairement passer par un serveur externe. Si par exemple le composant NFCR2 conserve en mémoire une ou plusieurs images, il est possible d'afficher des données DATA1 telles qu'un numéro de téléphone "0487654321" sous forme d'image plutôt que de texte et/ou précédées d'un logo d'opérateur. Les données complémentaires DATA2 sont par exemple :
display ("logo.jpg")
et sont concaténées avec les données DATA1 pour former l'instruction d'affichage suivante, exécutée par le processeur HP1 :
display ("logo.jpg") 0487654321

Il est possible aussi de compléter les données DATA1 avec de l'information publicitaire. Si un menu DATA1 "écoutez vos messages" est lu dans une puce RFID, de nouvelles lignes de menu DATA2 peuvent ainsi être ajoutées par le composant NFCR2 telles que "affichez votre compte", "accédez à votre serveur WAP", "appelez l'assistance".

Bien d'autres applications de ce mode de réalisation peuvent être prévues par l'homme de l'art, en fonction de la nature des données d'application complémentaires DATA2.

### Second mode de réalisation

Selon ce mode de réalisation, les données d'application complémentaires DATA2 sont générées par l'organe DTGEN à l'attention d'un processeur autre que celui à qui sont destinées les données d'application DATA1.

Ce mode de réalisation de l'invention permet notamment de réaliser une sorte d'espionnage d'un processeur par un autre, comme le font les programmes appelés "spywares". Pour ce type d'application, les échanges de données entre deux éléments du système NFC donnent lieu à la génération de données complémentaires DATA2 concernant ces échanges qui peuvent être exploitées par un autre processeur, de préférence le processeur principal HP1, ou par un serveur externe. Cela peut par exemple permettre de gérer des profils d'utilisateurs. Les éléments à espionner sont par exemple le processeur hôte sécurisé HP2 ou HP3 et les communications établies entre des dispositifs externes EXTD et ces processeurs via l'interface CLINT.

Ainsi, par exemple, lorsque l'organe HCIADM achemine à l'un des processeurs HP2, HP3 des données émises ou lues dans le dispositif externe EXTD via l'interface CLINT, l'organe DTGEN génère des données DATA2 pouvant inclure une information d'heure de transaction, une information sur le type de communication ou de transaction en cours (communication avec un lecteur, avec une carte, etc.), le contenu ou l'identifiant d'un fichier sélectionné, la nature et/ou le contenu des données échangées si celles-ci ne sont pas cryptées, ainsi que l'identité du processeur HP2 ou HP3 conduisant la communication ou la transaction. Ces données sont ensuite communiquées au processeur principal HP1 qui peut les envoyer à un serveur externe.

De façon générale, toute information acheminée à un processeur hôte ou émise par un processeur hôte est susceptible d'être répercutée au processeur HP1 via le processeur HP1 pour permettre au processeur HP1 de gérer un profil utilisateur ou permettre à un serveur distant de gérer un profil utilisateur. D'autres objectifs peuvent aussi justifier la production de ces données "d'espionnage" concernant l'activité des autres processeurs HP1, HP2.

Les données DATA2 peuvent ainsi prendre une forme analogue à "Insert database time, card, AID=10". Il s'agit d'une commande qui inscrit dans une base de données l'heure d'une transaction, le type de la transaction (ici de type "card") et un identifiant d'application (AID) de la transaction. Cette base de données est interne au téléphone. La commande pourrait aussi être envoyée par l'organe de routage HCIADM au processeur HP1 pour qu'il la répercute à un serveur d'application externe pour gestion d'un profil d'utilisateur.

### Formatage NDEF des données d'application complémentaires

Dans les modes de réalisation décrits ci-dessus, ainsi que dans d'autres modes de réalisation décrits plus loin, il peut être avantageux que les données complémentaires soit formatées selon un format NDEF. Le format NDEF a été spécifiquement conçu pour des échanges de données sans contact suivant la technologie NFC. Plus particulièrement le format NDEF a été défini dans le cadre du Forum NFC en tant que format commun de données pour des dispositifs et puces conformes aux spécifications de ce Forum. Ce formant permet donc de générer des commandes auxquelles certains éléments du système de communication n'auraient pas autrement accès.

Il sera noté que le format NDEF est sans rapport avec le protocole HCI pour le routage interne des données au sein d'un système NFC. Le format NDEF est un format de données destiné à des données transmises dans un canal de communication sans contact et est supposé interprétable par tout élément NFC recevant ces données. On prévoit par exemple de coder au format NDEF toutes les données insérées dans les étiquettes RFID.

Ainsi les données DATA2 au format NDEF peuvent être encapsulées dans une trame de routage si un protocole de routage est prévu au sein du système NFC, soit fournies sans encapsulation au processeur d'application concerné si aucun protocole de routage n'est prévu.

Par ailleurs le format NDEF concerne également les données d'application externe DATA1 (qui sont supposées lues dans ce format quand celui-ci sera généralisé) de sorte que le résultat de la combinaison des données complémentaires DATA2 et des données d'application DATA1 (concaténation ou mélange) est également au format NDEF.

Pour fixer les idées, la commande "http:\\www." au format NDEF s'écrit ainsi :
D1 01 18 55 00 68 74 74 70 3A 5C 5C 77 77 77 2E
Dans cette commande, les valeurs D1 01 18 55 00 forment un en-tête NDEF et les valeurs 68 74 74 70 3A 5C 5C 77 77 77 2-E forment le texte "http:\\www.".

Des étapes d'exécution des modes de réalisation décrits ci-dessus vont maintenant être décrites en référence aux figures 5 et 6.

La figure 5 illustre un premier exemple de séquence de génération de données d'application complémentaires. Au cours d'une étape S10, des données d'application DATA1 sont reçues par le processeur NFCC2 via l'interface CLINT. Ces données sont fournies par ou lues dans un dispositif externe EXTD (Cf. fig. 4). Des étapes d'initialisation de la communication sans contact, comprenant l'échange de commandes RFID entre l'interface CLINT et le dispositif externe EXTD, ne sont pas représentées dans un souci de simplicité. Plus particulièrement, les données DATA1 sont reçues par l'interface CLINT dans un format propre au protocole sans contact utilisé et sont transmises à l'organe de routage HCIADM via une trame de routage de type {CHANi; DATA1} propre au protocole de routage interne utilisé par le système NFC. Il sera de nouveau noté que l'utilisation d'une trame de routage entre l'interface CLINT et le processeur NFCC2 n'est pas nécessaire si l'interface CLINT ne forme pas un point de routage individualisé Pc et est incluse dans le processeur NFCC2 du point du vue du routage.

L'étape S10 déclenche, selon deux variantes possibles, des étapes S11, S12, S13 ou des étapes S14 et S15.

L'étape S11 comporte la fourniture des données DATA1 par l'organe de routage HCIADM à l'élément HPi identifié dans l'en-tête de la trame par le numéro de canal CHANi:

Lors de l'étape S12, l'organe DTGEN génère des données d'application complémentaires DATA2 . A cet effet les données DATA2 sont par exemple lues dans une mémoire du composant NFCR2 à laquelle l'organe DTGEN a accès. Cette mémoire peut comporter une table de correspondance entre plusieurs données complémentaires différentes et des paramètres d'identification des données DATA1. Ces paramètres peuvent être déterminés par l'organe DTGEN à l'aide d'une analyse des données DATA1 reçues. Ainsi, les données DATA2 peuvent être fonction de la nature des données DATA1.

A l'étape S13, l'organe de routage HCIADM encapsule les données DATA2 dans une nouvelle trame de routage et transmet cette nouvelle trame à l'élément HPi destinataire des données DATA1 en utilisant le même canal de routage CHANi. Comme proposé plus haut, les données DATA2 peuvent être au format NDEF.

Dans une variante, l'étape S10 déclenche directement l'étape S14 qui est identique à l'étape S12 mais est conduite avant le transfert des données DATA1 au processeur HPi. Les données complémentaires DATA2 sont fournies à l'organe de routage HCIADM qui les combine aux données DATA1 (concaténation ou mélange) l'ensemble pouvant être au format NDEF.

Ensuite, lors de l'étape S15, l'organe de routage transmet la trame de données incluant maintenant les données DATA1 associées aux données DATA2, à l'élément HPi destinataire des données DATA1.

La figure 6 illustre un second exemple de séquence de génération de données d'application complémentaires. Sur la figure 6, des données d'application DATA1 sont échangées via l'interface CLINT entre un dispositif externe EXTD et le processeur hôte HP2.

Selon une variante (a), les données DATA1 sont lues dans l'élément EXTD via l'interface CLINT ou fournies par le dispositif EXTD à l'interface CLINT. Les données DATA1 sont ensuite encapsulées dans une trame de type {CHANI; DATA1} qui est tout d'abord transférée à l'organe de routage HCIADM au cours d'une étape S20 puis est transférée de l'organe de routage au processeur hôte HP2 au cours d'une étape S21 en utilisant le même canal de routage. Comme indiqué précédemment l'action de routage entre l'interface CLINT et l'organe HCIADM peut être inexistante si l'interface CLINT fait partie du processeur NFCC2 et n'est pas vue par celui-ci comme un point de routage individualisé. L'étape S21 déclenche des étapes S24, S25 et S26 décrites plus loin.

Selon une variante (b), des données DATA1 sont envoyées par le processeur hôte sécurisé HP2 au dispositif externe EXTD via l'interface CLINT. Dans ce cas les données DATA1 sont encapsulées dans une trame de type {CHANi; DATA1} et sont acheminées jusqu'à l'organes HCIADM au cours d'une étape S22 puis acheminées jusqu'à l'interface CLINT au cours d'une étape S23 (si celle-ci est vue comme un point de routage individualisé par le processeur NFCC2). Les données DATA1 sont ensuite envoyées au dispositif EXTD dans une trame spécifique au protocole de communication sans contact. L'étape S23 déclenche également les étapes S24, S25 et S26.

Lors de l'étape S24, l'organe DTGEN génère des données d'application complémentaires DATA2. Comme indiqué précédemment, ces données DATA2 sont par exemple des données d'application "spyware" pouvant inclure une information d'heure de transaction, un type de communication, le contenu ou l'identifiant d'un fichier sélectionné, les données lues, l'identité du processeur conduisant la communication ou la transaction, etc. Les données DATA2 sont fournies à l'organe de routage HCIADM. Elles peuvent être au format NDEF, comme précédemment expliqué.

A l'étape S25, l'organe de routage encapsule les données DATA2 dans une nouvelle trame de routage de type {CHANj; DATA1} ayant un numéro de canal de routage différent de "i" et transmet cette trame au processeur hôte d'application HP1 pour traitement et analyse des données d'espionnage. Éventuellement, lors d'une étape S26, le processeur HP1 émet ces données d'espionnage vers un serveur externe, ce dernier assurant par exemple la gestion du profil de l'utilisateur.

### Exemples de troisième et quatrième modes de réalisation

Dans des troisième et quatrième modes de réalisation de l'invention, des données d'application DATA3 sont générées par l'organe DTGEN en réponse à la réalisation d'un événement interne. On appellera ces données des "données d'application internes"' pour les distinguer des données d'application complémentaires DATA2 émises en relation avec l'échange de données DATA1 avec un dispositif externe. A l'instar des données d'application complémentaires DATA2, les données d'application internes DATA3 sont exploitables par l'un des processeurs d'application HP1, HP2, HP3 pour exécuter une action déterminée.

Après avoir été générées, les données DATA3 sont transférées à l'un des processeurs hôtes. Si un protocole de routage HCI est implémenté dans le système NFC, comme cela été supposé dans ce qui précède, les données d'application peuvent alors, comme précédemment, être intégrées dans une trame de routage du type {CHANi ; DATA3} pour être envoyées par l'organe de routage HCIADM à l'élément du système NFC identifié dans l'en-tête CHANi.

Par ailleurs, les données DATA3 peuvent être formatées NDEF de sorte que le processeur d'application les "voit" comme si elles avaient été reçues via l'interface sans contact CLINT.

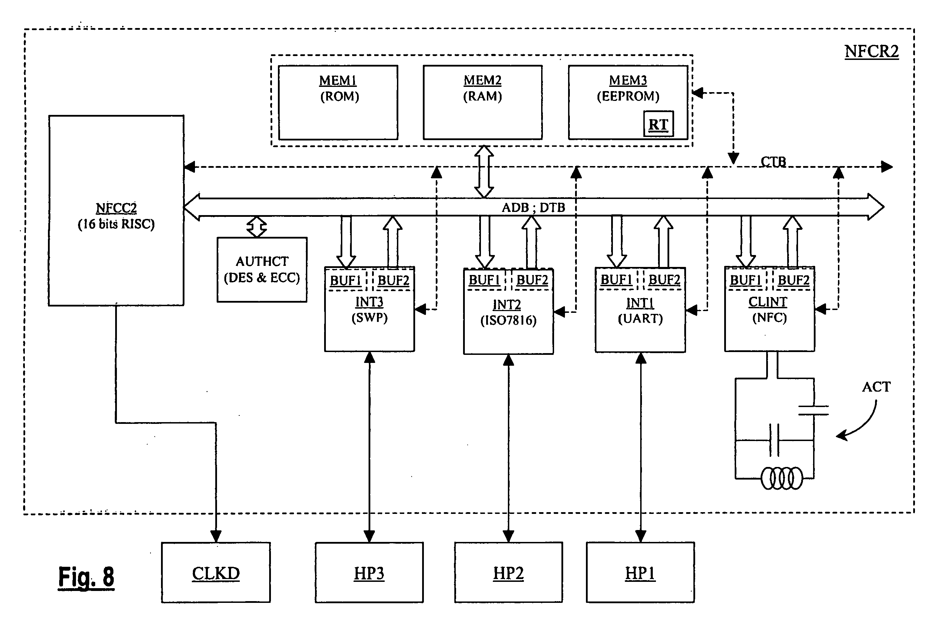

Dans le troisième mode de réalisation, l'événement interne est indépendant des processeurs hôtes. Il s'agit par exemple de la réalisation d'un événement d'horloge EVT. Dans ce cas, le composant NFCR2 est relié à un dispositif d'horloge CLKD ou inclut un tel dispositif d'horloge (Cf. fig. 4 et 8) et reçoit un signal d'horloge CLK. Le dispositif d'horloge CLKD est par exemple le dispositif d'horloge à quartz du téléphone mobile, externe au système NFCS2, qui permet au téléphone de calculer l'heure et la date du jour. Le signal d'horloge CLK est par exemple un signal carré ou sinusoïdal. Pour générer des événements d'horloge, le composant NFCC2 utilise par exemple un compteur CMPT (représenté comme étant extérieur au processeur NFCC2 sur la figure 4 dans un but d'illustration) qui génère l'événement EVT par exemple toute les "N" secondes après avoir été activé.

En réponse à la réalisation de l'événement EVT le, composant NFCR2 fournit des données DATA3 à l'un des processeurs d'application du système NFC. Les données DATA3 ,sont de préférence au format NDEF ou dans un format compréhensible pour le processeur d'application (le format NDEF étant supposé ici le format standard des processeurs d'application). Les données DATA3 formatées NDEF sont par exemple une signature cryptée, une valeur d'horloge, etc. De façon générale, les divers exemples de données complémentaires DATA2 ou de combinaison de données DATA1 et DATA2 décrits plus haut peuvent former des données d'application interne DATA3.

Dans un exemple d'application, le composant NFCR2 émet des commandes NDEF à des instants déterminés par le dispositif d'horloge et/ou à intervalles réguliers en fonction du signal d'horloge CLK. L'événement d'horloge EVT est par exemple un événement récurrent qui correspond à l'écoulement d'une période de temps déterminée, par exemple 1 minute, 10 minutes, une heure... Le composant NFCR2 peut aussi comporter un générateur pseudo-aléatoire de mot de passe dynamique capable de générer un mot de passe dynamique sur réalisation de l'événement.

Dans le quatrième mode de réalisation, l'événement interne est généré par un processeur hôte. Il s'agit par exemple de la réception, par le processeur NFCC2, d'une requête REQj (commande ou instruction) émise par l'un des processeurs hôtes.

Le composant NFCR2, sur réception de la requête REQj émise par un processeur hôte, par exemple le processeur hôte HP2, génère des données DATA3 qui simulent des données lues dans ou fournies par une puce RFID ou tout autre dispositif externe EXTD. Les données DATA3 sont transmises à un autre processeur hôte que celui ayant émis la requête, par exemple le processeur HP1. Ce mode de réalisation permet par exemple de simuler la lecture d'une puce RFID sur requête de l'un des éléments du système NFC. Cela est utile par exemple pour transmettre au processeur d'application HP1 des données conformes à un jeu de commandes (par exemple des données selon le format NDEF) auquel l'élément émetteur des instructions, une carte SIM notamment, n'a pas accès.

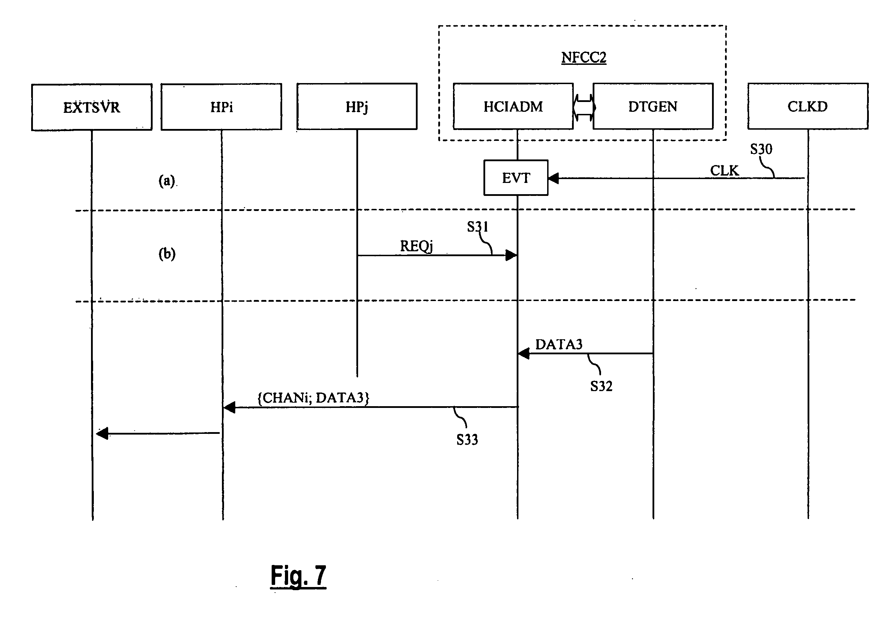

Des étapes illustrant des exemples de mise en oeuvre du troisième et quatrième mode de réalisation sont représentées sur la figure 7.

Selon une première variante (a), le processeur NFCC2 reçoit le signal CLK du dispositif d'horloge CLKD lors d'une étape S30 (ce signal est reçu en continu mais est schématisé par l'étape S30). Le signal CLK déclenche, à un instant donné (par exemple toutes les minutes.) l'événement d'horloge EVT. L'événement EVT déclenche des étapes S32 et S33 décrites plus loin.

Selon une seconde variante (b), le processeur NFCC2 reçoit une requête REQj du processeur hôte HPj (où j = 1, 2 ou 3) lors d'une étape S31. Cette requête déclenche également les étapes S32 et S33.

Lors de l'étape S32, l'organe DTGEN du processeur NFCC2 génère des données d'application DATA3. Comme indiqué précédemment, les données DATA3 peuvent inclure une donnée d'horloge (heure, date, etc.), une commande spécifique (variante a) ou une commande et/ou une simulation de données lues dans ou fournies par un dispositif externe EXTD (variante b).

A l'étape S33, le processeur NFCC2 transfère les données DATA3 à l'un des processeurs hôtes HPi (où i = 1, 2 ou 3). Ici, ce transfert est assuré par l'organe de routage HCIADM qui encapsule les données DATA3 dans une trame de routage du type {CHANi ; DATA3) et transmet cette trame au processeur de destination. Dans la variante (b), le point de destination Pi identifié par le numéro de canal CHANi est différent du point Pj ayant émis la requête REQj.

Comme autre exemple d'application, l'événement d'horloge EVT provoque l'envoi au processeurs hôte HP1, par l'organe DTGEN, d'une clé de sécurité générée au moyen du coprocesseur de cryptographie AUTHCT (Cf. fig. 8) mentionné plus haut. Le processeur HP1 transmet ensuite cette clé à un serveur externe EXTSVR auquel l'utilisateur s'est connecté. La clé est par exemple renouvelée toutes les minutes et est transmise toutes les minutes au site web. Sans cette clé le serveur externe coupe la connexion ou refuse d'exécuter la prestation de service.

Il sera noté que le troisième ou le quatrième modes de réalisation peut être mis en oeuvre sans mettre en oeuvre le premier ou le second mode de réalisation de l'invention, car le composant NFCR2 peut être configuré pour générer les données d'application internes DATA3 sans être configuré pour générer les données d'application complémentaires DATA2 au moment du transfert ou du routage de données d'application DATA1, et vice-versa.

De même, comme cela a déjà été indiqué, les divers modes de réalisation précédemment décrits peuvent être mis en oeuvre indépendamment de là mise en oeuvre d'un protocole de routage au sein du système NFC, notamment le protocole de routage qui sera maintenant décrit à titre d'exemple, c'est-à-dire être mis en oeuvre dans le cadre d'un simple transfert de données au sein du système NFC, sans protocole routage.

### Exemple de protocole de routage

Dans un souci de simplicité, on suppose ici et dans ce qui suit que l'interface CLINT ne peut émettre ou recevoir des données que selon trois protocoles PT1, PT2, PT3, par exemple ISO 14443-A ou "ISOA", ISO 14443-B ou "ISOB" et ISO 15693 ou "ISO15". Elle présente par exemple trois modes de fonctionnement M1, M2, M3, à savoir "lecteur", "émulation de carte" et "device". On suppose également que l'interface CLINT est configurée comme un point source ou destination individualisé pour le routage de données.

Le protocole HCI mis en oeuvre ici présente les caractéristiques générales suivantes :
- la, prévision de commandes CMD permettant la gestion d'un chemin de données (canal de routage), notamment des commandes d'ouverture, de fermeture et de modification de chemins de données, ces commandes CMD comprenant un champ d'en-tête et un champ de données de routage comprenant les caractéristiques du canal de routage,
- l'utilisation de trames de données comprenant un champ d'en-tête comportant un numéro de canal de routage CHANi et un champ de données contenant des données d'application DATA.

Le processeur NFCC2 assure le routage des trames de données en utilisant une table de routage qui lui permet de conserver en mémoire la correspondance entre chaque numéro de canal de routage CHANi et des caractéristiques du canal de routage correspondant.

Les chemins de données enregistrés dans la table de routage sont différenciés les uns des autres au moins par les paramètres suivants :
CHANi; IDsp, IDdp, Mi, PTi
CHANi étant le numéro de canal de routage attribué au chemin de données, IDsp un identifiant du point source du chemin de données, IDdp un identifiant du point de destination du chemin de données, Mi et PTi étant le mode de fonctionnement et le protocole de communication sans contact utilisés par l'interface CLINT pour émettre ou recevoir des données via un canal de transmission de données sans contact.

A chaque fois que le processeur NFCC2 attribue un numéro de canal de routage CHANi à un chemin de données, il inscrit dans la table de routage RT les paramètres IDsp, IDdp, Mi, PTi indiqués dans la commande.

Les commandes d'ouverture, de fermeture ou de modification d'un chemin de données sont émises par l'un des processeurs hôtes HP1, HP2, HP3 ou par l'interface CLINT et spécifient le mode de .fonctionnement Mi et le protocole PTi de l'interface CLINT pour le chemin de données concerné. Si l'ouverture d'un chemin de données est demandée par l'un des processeurs hôtes HP1, HP2 ou HP3, le mode Mi et le protocole PTi figurant dans la commande sont utilisés pour configurer l'interface CLINT en ce qui concerne le canal de communication sans contact que l'interface CLINT doit créer pour émettre les données qui seront reçues via le chemin de données. Si l'ouverture d'un chemin de données est demandée par l'interface CLINT, le mode de fonctionnement Mi et le protocole PTi spécifiés dans la commande émise par l'interface CLINT sont informatifs et précisent les conditions de mode de fonctionnement et de protocole dans lesquelles l'interface CLINT a reçu les données qu'elle veut transmettre dans le chemin de données.

Un exemple de table de routage créée par le processeur NFCC2 est décrit par le tableau 1 en Annexe 1, qui fait partie intégrante de la description. Cette table de routage est créée après réception d'une série de commandes d'ouverture de route ayant des points sources localisés dans l'un des processeurs HP1, HP2 ou HP3 (soit un point source P1, P2 ou P3). Optionnellement, le processeur NFCC2 peut définir un point de destination secondaire destiné à recevoir une copie des données circulant dans le chemin de données. Le point de destination secondaire ou point de notification est déterminé par le processeur NFCC2 à partir d'une table de notification (non représentée sur les figures) qui lui indique les chemins de données pour lesquels les données doivent être notifiées à l'autre processeur hôte. Bien que présentée de façon statique dans le tableau 1, la table de routage est dynamique et est mise à jour en temps réel en fonction des commandes de création, de modification ou de suppression reçues par le processeur NFC2.

Dans une variante de réalisation, la table de routage est statique et a été préenregistrée par le processeur NFCC2, par exemple à la demande de l'un des processeurs hôtes et à la mise sous tension du système. Le tableau 2 en Annexe 1 décrit un exemple de table de routage préenregistrée ayant comme points sources les points P1, P2 ou P3 localisés dans les processeurs hôtes HP1, HP2, HP3. Le numéro de canal CHANi peut également être préenregistré dans la table de routage pour chaque configuration de routage envisageable. Dans une telle table préenregistrée, un champ "occupé" et "ouvert" ou "autorisé" est prévu dans chaque ligne de la table (une ligne correspondant à un canal de routage). Le processeur NFCC2 inscrit la valeur "1" dans le champ "ouvert" lorsqu'il ouvre le chemin de données correspondant, et inscrit la valeur "0" en réponse à une commande de fermeture du chemin de données. Lorsqu'un chemin de données est utilisé, le processeur NFCC2 inscrit la valeur "1" dans le champ "utilisé".

La transmission des données reçues dans les trames de données est également sous le contrôle du processeur NFCC2, qui se réfère à la table de routage pour déterminer les points de destination de ces données. Il n'est pas nécessaire ici que le point source qui envoie les données au processeur spécifie tous les paramètres du canal de routage utilisé : le champ d'en-tête de la trame de routage comprend simplement des bits de paramétrage T et L et 6 bits de numéro de canal (permettant de router simultanément 63 chemins de données, le canal "0" étant réservé à l'administration du protocole HCI).

Ainsi, sur réception d'une trame de routage, le processeur NFCC2 renvoie les données au point de destination désigné dans la table de routage, en utilisant le numéro de canal en tant qu'index pour trouver ce point de destination dans la table de routage (ainsi qu'éventuellement le point de notification). Si le point de destination est le point Pc (interface CLINT), le processeur NFCC2 assure le paramétrage de l'interface CLINT pour que celle-ci envoie les données dans un canal de transmission de données sans contact conforme aux informations de protocole sans contact PTi et de mode de fonctionnement Mi figurant dans la table de routage. Dans une variante de réalisation, l'interface CLINT assure elle-même son paramétrage en lisant la table de routage lorsque des données sont reçues dans une trame de routage.

Ainsi, la table de routage permet le paramétrage de l'interface CLINT sans qu'il soit nécessaire d'inclure les paramètres de mode de fonctionnement Mi et de protocole de communication sans contact PTi dans les entêtes des trames de données. Cette table de routage n'est donc pas une simple table de routage au sens conventionnel du terme, mais forme également une table de paramétrage.

Le tableau 3 en Annexe 1 décrit un exemple de table de routage dynamique comprenant des chemins de données créés à la demande de l'interface CLINT (ayant Pc comme point source). La table de routage créée ici par le processeur NFCC2 à la demande de l'interface CLINT indique que les données doivent être envoyées aux trois points de destination P1, P2, P3, localisés dans les processeurs hôtes HP1, HP2, HP3, à charge au processeur hôte qui n'est pas concerné par les données de ne pas y répondre et de laisser l'autre processeur hôte envoyer à l'interface CLINT des données de réponse.

Les chemins de données créés à la demande de l'un des processeurs hôtes HP1, HP2, HP3 ou à la demande de l'interface CLINT sont de préférence bidirectionnels. Ainsi, par exemple, une fois qu'un chemin de données a été créé par un point P1 localisé dans le processeur HP1, pour émettre des données dans un canal de communication sans contact défini par le paramètre de mode M2. et le protocole PT2, toutes les données reçues par l'interface CLINT dans le mode M2 et suivant le protocole PT2 seront envoyées dans ce chemin de données et seront donc reçues par le point P1. Par ailleurs la prévision de chemins de données bidirectionnels impose une gestion des conflits éventuels, en interdisant que deux chemins bidirectionnels ayant des points source et/ou destination différents utilisent les mêmes paramètres de mode Mi et de protocole PTi pour l'interface CLINT. Par exemple, la table de routage décrite par le tableau 1 représente des chemins de données qui ne peuvent coexister (par exemple canal 1 et canal 9, ces chemins de données n'étant décrits dans le même tableau qu'à titre illustratif).

### Exemple d'architecture matérielle et logicielle du composant NFCR2

La figure 8 représente un exemple d'architecture matérielle du composant NFCR2 de la figure 4. Le composant comprend :
- le processeur NFCC2 et l'interface CLINT déjà décrits, ainsi que le dispositif d'horloge CLKD (qui demeure optionnel si le second mode de réalisation de l'invention n'est pas mis en oeuvre),
- un plan mémoire comprenant une mémoire programme MEM1 de type ROM (mémoire morte), une mémoire de données MEM2 de type RAM (mémoire vive), et une mémoire effaçable et programmable électriquement MEM3 de type EEPROM dans laquelle la table de routage RT est enregistrée et dans laquelle la table de correspondance éventuellement utilisée par l'organe DTGEN peut également être enregistrée,
- un circuit d'authentification et de correction d'erreur AUTHCT comprenant des algorithmes DES (Data Encryption Standard) et ECC (Elliptic Curve Cryptography), ou d'autres algorithmes de cryptographie,
- un ,port de connexion INT1 de type UART (universel Asynchronous Receiving Transmitting), auquel le processeur hôte HP1 est ici connecté,
- un port de connexion INT2 de type ISO7816 auquel le processeur hôte HP2 est ici connecté (le processeur HP2 étant supposé ici être une carte SIM),
- un port de connexion INT3 de type SWP (Single Wire Protocol) permettant de connecter le processeur hôte HP3,
- un bus de données DTB et un bus d'adresse ADB reliant le plan mémoire, le processeur NFCC2, l'interface CLINT et les ports INT1, INT2, INT3, et
- un bus de contrôle CTB permettant au processeur NFCC2 de contrôler et d'accéder à ces divers éléments en lecture et/ou écriture.

Il sera noté que les bus ADB, DTB, CTB et les interfaces INT1 à INT3 forment ensemble ce qui a été précédemment désigné comme le chemin de données global GP du système NFC (fig. 4).

L'interface CLINT et les ports INT1, INT2, INT3 comportent chacun un tampon d'entrée BUF1 à entrée parallèle et un tampon de sortie BUF2 à sortie parallèle accessible en écriture, respectivement en lecture, via le bus de données et le bus d'adresse. L'échange de données formant les commandes de routage ou les trames de données entre les processeurs hôtes HP1, HP2, HP3 et le processeur NFCC2 ou l'interface CLINT s'effectue ainsi par blocs de données de la taille des tampons BUF1, BUF2, et est cadencé par le processeur NFCC2.

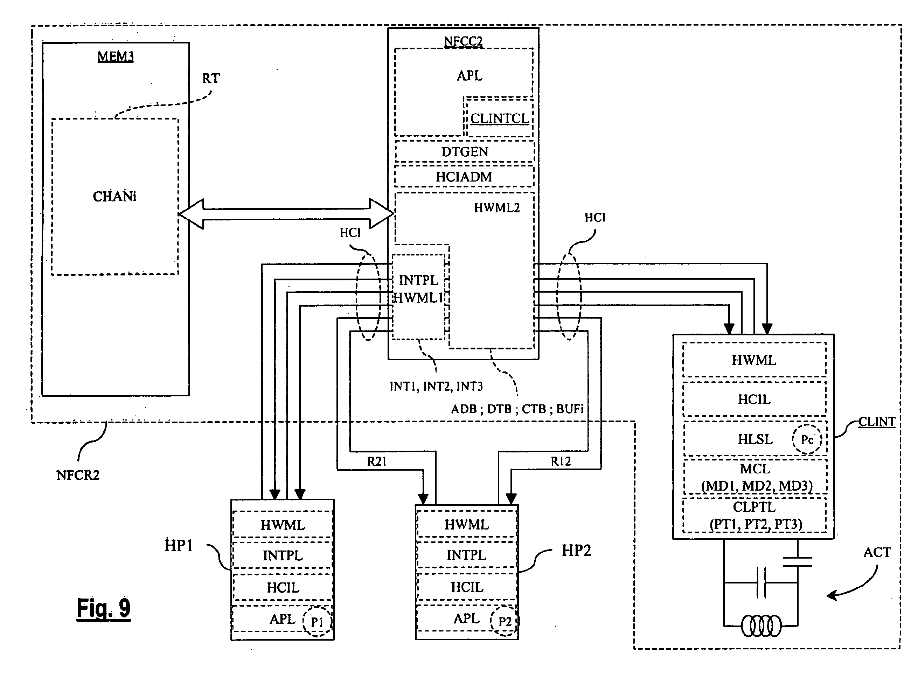

La figure 9 représente un exemple d'architecture logicielle du composant NFCR2 et des processeurs hôtes HP1, HP2 (le processeur hôte HP3 n'est pas représenté et supposé de même architecture que le processeur hôte HP2). Cette architecture logicielle comprend, pour le composant NFCR2 et les processeurs hôtes du système, plusieurs couches logicielles allant du niveau le plus bas (couche liaison de données) au niveau le plus haut (couche application). La représentation qui est faite de ces couches logicielles en figure 9 est simplifiée par rapport à l'architecture logicielle réelle d'un système NFC mais est suffisante pour l'homme de l'art souhaitant réaliser l'invention de la manière proposée ici.

Chaque processeur hôte HP1, HP2 comprend au moins quatre couches logicielles, dans un ordre de niveau croisant :
- une couche de plus bas niveau HWML (Hardware Management Layer) celui gère le fonctionnement des éléments matériels (hardware) permettant aux processeurs hôtes d'échanger des données avec le processeur NFCC2. Il s'agit par exemple de la couche de gestion de l'interface UART pour le processeur HP1 et de la couche de gestion de l'interface ISO7816 pour le processeur HP2.
- une couche INTPL (Interface Protocol Layer) qui gère le protocole des ports de communication INT1, INT2. Il s'agit par exemple de la couche de gestion du protocole UART pour le processeur HP1 et de la couche de gestion du protocole ISO7816 pour le processeur HP2.
- une couche HCIL (HCI Layer) qui gère le protocole HCI décrit précédemment, c'est-à-dire qui gère la création d'un canal de communication en générant les commandes de routage et en traitant les messages de réponse à de telles commandes. Cette couche repose sur les couches INTPL et HWML qui sont quasi transparentes pour elle.
- une couche APL (Application Layer) de haut niveau qui gère les applications RFID telles que celles représentées en figures 2 et 4 (lecture d'une carte à puce ou d'une étiquette électroniques émulation d'une carte à puce, dialogue en mode "device" avec un processeur externe pour échanger des fichiers, etc.). Cette couche peut comprendre plusieurs programmes application, chacun étant sécurisé ou non (selon les ressources internes du processeur) et chacun utilisant tel type de protocole PTi et tel mode de fonctionnement Mi de l'interface CLINT. Ainsi, cette couche de haut niveau repose sur les couches HWML, INTPL et la couche HCIL, qui sont quasi transparentes pour elle. La rapidité du transfert des données à travers les chemins de données créés grâce à la couche HCIL entraîne avantageusement un accroissement sensible des performances de la couche application APL.

Les points source ou destination P1, P2 et P3 localisés dans les processeurs hôtes peuvent être des "services" (des applications déterminées). Ces service peuvent demander au processeur NFCC22, chacun indépendamment de l'autre, de créer des chemins de données pour utiliser simultanément l'interface CLINT (sous réserve de collision de modes et de protocoles, comme indiqué plus haut). Ainsi, cette architecture logicielle permet de mettre en oeuvre un service en tant que points source ou destination d'un chemin de données, et permet la création simultanée de plusieurs chemins de données entre deux entités, par exemple entre deux processeurs hôtes ou entre un processeur hôte et l'interface d'émission/réception de données sans contact.

De façon sensiblement similaire, le processeur NFCC2 comporte les couches logicielles suivantes :
- deux couches HWML1 et INTPL du même type que les couches HWML et INTPL présentes dans les processeurs hôtes. Dans un souci de simplification du schéma, ces couches sont représentées dans le processeur NFCC2 mais sont en réalité localisées dans les ports INT1 et INT2, qui sont considérés comme faisant partie du processeur NFCC2, ainsi que les bus ADB, DTB, CTB. En effet le traitement des protocoles UART et 7816 est assuré ici dans les ports INT1, INT2, qui mettent à la disposition du processeur NFCC2 leurs tampons d'entrée et de sortie BUF1, BUF2 via les bus ADB, DTB, CTB.
- une autre couche de bas niveau HWML2 qui permet au processeur NFCC2 d'écrire les tampons BUF1 et de lire les tampons BUF2, via les bus ADB, DTB, CTB, en décomposant les trames de données ou les commandes en blocs de données de même taille que les tampons.
- une couche HCIADM ou couche d'administration du protocole HCI, qui dialogue avec les couches HCIL des processeurs hôtes HP1, HP2 en tant qu'administrateur du routage et forme l'organe HCIADM précédemment décrit. Ainsi cette couche exécute les tâches d'attribution de chemins de données décrites plus haut, et accède à la table de routage RT en lecture et en écriture via la couche de bas niveau HMML2.
- une couche DTGEN formant l'organe générateur de données d'application complémentaires DATA2 ou de données d'application internes DATA3, qui interagit avec la couche HCIADM pour mettre en oeuvre l'un des deux modes de réalisation de l'invention; comme indiqué précédemment les couches HCIADM et DTGEN peuvent également être fusionnées en une seule entité logicielle.
- une couche CLINTCL (Contactless Interface Control Layer) qui gère l'interface CLINT et qui indique à cette dernière le mode Mi dans lequel elle doit se placer et le protocole PTi à utiliser pour émettre des données dans un canal de communication sans contact. A cet effet, la couche CLINTCL exploite les paramètres PTi et Mi présents dans la table de routage. Plus particulièrement, la couche HCIADM écrit ces paramètres dans la table de routage en réponse à des commandes d'ouverture de chemins de données, tandis que la couche CLINTCL recherche ces paramètres dans la table en utilisant comme index le numéro de canal des trames de données envoyées par les processeurs hôtes HP1, HP2. Cette couche contrôle également l'interface CLINT en mode réception de données sans contact et lui demande cycliquement d'effectuer un balayage des modes (mode lecteur, mode émulation, mode "device"...) et, dans chaque mode, de rechercher des données entrantes. Cela signifie que l'interface CLINT émet à intervalles réguliers un champ magnétique pour interroger d'éventuelles cartes ou étiquettes sans contact (ou autres objets portatifs fonctionnant sans contact) qui pourraient être présentes dans son champ d'interrogation. L'interface CLINT se place également à intervalles réguliers dans un mode d'écoute (mode "émulation") pour détecter si un lecteur en mode actif envoie des messages d'interrogation.
- une couche optionnelle APL qui peut gérer elle-même des applications, ~à l'instar des processeurs hôtes. Dans ce cas, la communication de données entre le processeur NFCC2 et l'interface CLINT peut être faite en passant par le canal de communication HCI, si l'interface CLINT est équipée de la couche INTPL, ce qui est le cas dans le mode de réalisation représenté en figure 9. Cette couche accède à la table de correspondance en lecture et en écriture via la couche de bas niveau HWML2.

Enfin, l'interface CLINT comporte les couches logicielles suivantes :
- du côté du processeur NFCC2, une couche de bas niveau HWML équivalente à la couche HWML2 du processeur NFCC2, pour gérer les tampons de données BUF1, BUF2 via les bus ADB, DTB, CTB.
- une couche HCIL (comme indiqué ci-dessus) qui rend l'interface CLINT compatible avec le protocole HCI,
- du coté du circuit d'antenne ACT, des couches CLPTL (Contactless Protocol Layer) et MCL (Mode Control Layer) qui assurent le contrôle ou le traitement des signaux électriques appliqués au circuit d'antenne ACT ou reçus par celui-ci, pour la mise en oeuvre des modes de fonctionnement M1, M2, M3 et des protocoles PT1, PT2, PT3.
- entre les couches situées du coté du processeur NFCC2 et les couches situées du coté du circuit d'antenne, une couche centrale de haut niveau HLSL (High Level Service Layer) qui permet de définir dans l'interface CLINT plusieurs points source ou destination Pc pour créer plusieurs chemins de données avec des points P1, P2, P3 multiples dans les couches application APL des processeurs hôtes HP1, HP2, HP3. Bien entendu, cette architecture de haut niveau est optionnelle et des points multiples Pc localisés virtuellement dans l'interface CLINT peuvent être gérés par le processeur NFCC2.

Il apparaîtra clairement à l'homme de l'art que la présente invention est susceptible de diverses variantes de réalisation. Ainsi l'invention n'est pas limitée à un système comportant plusieurs processeurs hôtes. Elle couvre également le contrôle de l'exécution d'applications dans un système ayant un seul processeur hôte et exécutant plusieurs applications amenées à communiquer entre elles.

Il est à noter que dans un proche avenir les processeurs hôtes pourront être totalement virtuels et intégrés dans le composant NFCR2 lui-même, qui pourra alors prendre la forme d'un circuit intégré à processeurs multiples.

Par ailleurs, bien que les exemples de mise en oeuvre de l'invention précédemment décrits se rapportent à un téléphone mobile dans lequel les processeurs HP2, HP3 sont généralement sécurisés, des applications de l'invention peuvent reposer sur l'utilisation d'un processeur hôte HP2 voire de deux processeurs hôtes HP2, HP3 qui ne sont pas sécurisés, si ces applications n'exigent pas un niveau de sécurité élevé. Inversement, le processeur hôte HP1 considéré dans ce qui précède comme le processeur principal du système NFC en ce qu'il contrôle des éléments périphériques essentiels comme un dispositif d'affichage ou des moyens de radiotéléphonie, pourrait être un processeur sécurisé.

### Annexe 1 faisant partie intégrante de la description - Exemples de tables de routage

**Tableau 1 : Exemple de table de routage dynamique avec des points sources localisés dans HP1 ou HP2**

| | | | | **IDdP** | | |
|---|---|---|---|---|---|---|
| **CHANi** | **IDsp** | **PTi** | **Mi** | **Envoyer** | **Notifier** | **Commentaires** |
| 1 | ID(P1) | PT1 | M1 | ID(Pc) | ID(P2) | Processeur HP1 vers interface CLINT en mode lecteur ISOA |
| 2 | ID(P1) | PT2 | M1 | ID(Pc) | - | Processeur HP1 vers interface CLINT en mode lecteur ISOB |
| 3 | ID(P1) | PT3 | M1 | ID(Pc) | - | Processeur HP1 vers interface CLINT en mode lecteur ISO15 |
| 4 | ID(P1) | PT1 | M3 | ID (Pc) | ID(P2) | Processeur HP1 vers interface CLINT en mode "device" ISOA |
| 5 | ID(P1) | PT2 | M3 | ID (Pc) | - | Processeur HP1 vers interface CLINT en mode "device" ISOB |
| 6 | ID(P1) | PT3 | M3 | ID(Pc) | - | Processeur HP1 vers interface CLINT en mode "device" ISO15 |
| 7 | ID(P1) | - | - | ID(P2) | - | Processeur HP1 vers carte SIM (HP2) |
| 8 | ID(P2) | - | - | ID(P1) | - | Carte SIM (HP2) vers processeur HP1 |
| 9 | ID(P2) | PT1 | M1 | ID(Pc) | - | Carte SIM (HP2) vers interface CLINT en mode lecteur ISOA |
| 10 | ID(P2) | PT2 | M1 | ID(Pc) | ID(P2) | Carte SIM (HP2) vers interface CLINT en mode lecteur ISOB |
| 11 | ID(P2) | PT3 | M1 | ID(Pc) | ID(P2) | Carte SIM (HP2) vers interface CLINT en mode lecteur ISO15 |
| 12 | ID(P2) | PT1 | M3 | ID(Pc) | - | Carte SIM (HP2) vers interface CLINT en mode "device" ISOA |
| 13 | ID(P2) | PT2 | M3 | ID(Pc) | ID(P2) | Carte SIM (HP2) vers interface CLINT en mode "device" ISOB |
| 14 | ID(P2) | PT3 | M3 | ID(Pc) | ID(P2) | Carte SIM (HP2) vers interface CLINT en mode "device" ISO15 |

**Tableau 2 : Exemple de table de routage préenregistrée avec des points sources localisés dans HP1 ou HP2**

| | | | | **IDdp** | | | | |
|---|---|---|---|---|---|---|---|---|
| **CHANi** | **IDsp** | **PTi** | **Mi** | **Envoyer** | **Notifier** | **Ouvert** | **Occupé** | **Commentaires** |
| 1 | ID(P1) | PT1 | M1 | ID(Pc) | ID(P2) | | 1 | Processeur HP1 vers interface CLINT en mode lecteur ISOA |
| 2 | ID(P1) | PT2 | M1 | ID(Pc) | - | | 0 | Processeur HP1 vers interface CLINT en mode lecteur ISOB |
| 3 | ID(P1) | PT3 | M1 | ID(Pc) | - | | 0 | Processeur HP1 vers interface CLINT en mode lecteur ISO15 |
| 4 | ID(P1) | PT1 | M3 | ID(Pc) | ID(P2) | | 0 | Processeur HP1 vers interface CLINT en mode "device" ISOA |
| 5 | ID(P1) | PT2 | M3 | ID(Pc) | - | | 0 | Processeur HP1 vers interface CLINT en mode "device" ISOB |
| 6 | ID(P1) | PT3 | M3 | ID(Pc) | - | | 0 | Processeur HP1 vers interface CLINT en mode "device" ISO15 |
| 7 | ID(P1) | - | - | ID(Pc) | | | 1 | Processeur HP1 vers carte SIM (HP2) |
| 8 | ID(P2) | - | - | ID(P1) | - | | 0 | Carte SIM (HP2) vers processeur HP1 |
| 9 | ID(P2) | PT1 | M1 | ID(Pc) | - | | 0 | Carte SIM (HP2) vers interface CLINT en mode lecteur ISOA |
| 10 | ID(P2) | PT2 | M1 | ID(Pc) | ID(P2) | | 0 | Carte SIM (HP2) vers interface CLINT en mode lecteur ISOB |
| 11 | ID(P2) | PT3 | M1 | ID(Pc) | ID(P2) | | 0 | Carte SIM (HP2) vers interface CLINT en mode lecteur ISO15 |
| 12 | ID(P2) | PT1 | M3 | ID(Pc) | - | | 1 | Carte SIM (HP2) vers interface CLINT en mode "device" ISOA |
| 13 | ID(P2) | PT2 | M3 | ID(Pc) | ID(P2) | | 0 | Carte SIM (HP2) vers interface CLINT en mode "device" ISOB |
| 14 | ID(P2) | PT3 | M3 | ID(Pc) | ID(P2) | | 0 | Carte SIM (HP2) vers interface CLINT en mode "device" IS015 |

**Tableau 3 : Exemple de table de routage dynamique avec un point source localisé dans l'interface CLINT et en envoyant toutes les données reçues aux processeurs hôtes HP1, HP2**

| **CHANi** | **IDsp** | **PTi** | **Mi** | **IDdp** | | **Commentaires** |
|---|---|---|---|---|---|---|
| 40 | ID(Pc) | PT1 | M1 | ID(P1) | ID(P2) | Interface CLINT en mode lecteur ISO A vers processeurs HP1, HP2 |
| 41 | ID(Pc) | PT2 | M1 | ID(P1) | ID(P2) | Interface CLINT en mode lecteur ISO B vers processeurs HP1, HP2 |
| 42 | ID(Pc) | PT3 | M1 | ID(P1) | ID(P2) | Interface CLINT en mode lecteur ISO 15693 vers processeurs HP1, HP2 |
| 43 | ID(Pc) | PT1 | M2 | ID(P2) | ID(P2) | Interface CLINT en mode émulation ISO A vers processeurs HP1, HP2 |
| 44 | ID(Pc) | PT2 | M2 | ID(P1) | ID(P2) | Interface CLINT en mode émulation ISO B vers processeurs HP1, HP2 |
| 45 | ID(Pc) | PT3 | M2 | ID(P1) | ID(P2) | Interface CLINT en mode émulation ISO 15693 vers processeurs HP1, HP2 |
| 46 | ID(Pc) | PT1 | M3 | ID(P1) | ID(P2) | Interface CLINT en mode "device" ISO A vers processeurs HP1, HP2 |
| 47 | ID(Pc) | PT2 | M3 | ID(P1) | ID(P2) | Interface CLINT en mode "device" ISO B vers processeurs HP1, HP2 |
| 48 | ID(Pc) | PT3 | M3 | ID(P1) | ID(P2) | Interface CLINT en mode "device" ISO 15693 vers processeurs HP1, HP2 |

## Revendications

1. Procédé de gestion de données d'application (DATA1, DATA2, DATE3) dans un système NFC embarqué ou destiné à être embarqué dans un objet portatif et comprenant une interface d'émission/réception de données sans contact (CLINT), un ou plusieurs processeur(s) hôte(s) (HP1, HP2, HP3) et un processeur de routage ou de transfert de données (NFCC2, HCIADM, DTGEN) pour réaliser des actions de routage ou de transfert de données d'application entre l'interface d'émission/réception de données sans contact et le(s) processeur(s) hôte(s) (HP1-HP3), procédé **caractérisé en ce qu'**il comprend les étapes consistant à :
- en réponse à la réalisation d'un événement interne (EVT, REQj) au sein du système NFC, générer des données d'application internes (DATA3) formant une commande exécutable par un processeur hôte auquel elles sont destinées, et
- fournir les données d'application internes (DATA3) à un processeur hôte du système NFC.

2. Procédé selon la revendication 1, dans lequel les données d'application internes sont générées dans un format déterminé (NDEF) pour simuler des données qui seraient lues dans ou fournies par un composant externe (EXTD) via un canal de communication sans contact.

3. Procédé selon l'une des revendications 1 ou 2, comprenant les étapes consistant à :
- recevoir un signal d'horloge (CLK),
- générer un événement interne (EVT) à partir du signal d'horloge, et
- en réponse à la survenance de l'événement interne, fournir les données d'application internes (DATA3) à un processeur hôte du système NFC.

4. Procédé selon l'une des revendications 1 ou 2, comprenant les étapes consistant à :
- configurer un premier processeur hôte du système NFC pour qu'il émette une requête interne (REQj) valant événement interne, et
- en réponse à l'émission de la requête, fournir les données d'application internes (DATA3) à un second processeur hôte du système NFC.

5. Procédé selon l'une des revendications 1 à 4, comprenant une étape d'envoi des données d'application internes (DATA3) à un serveur externe (EXTSVR), par le processeur hôte à qui elles ont été fournies.

6. Procédé selon l'une des revendications 1 à 5, dans lequel les données d'application internes (DATA3) comprennent ou forment une clé de sécurité.

7. Procédé selon l'une des revendications 1 à 6, dans lequel les données d'application internes (DATA3) simulent une commande RFID.

8. Procédé selon l'une des revendications 1 à 7, comprenant l'étape consistant à générer les données d'application internes (DATA3) au moyen d'une fonction de cryptographie (AUTHCT).

9. Dispositif (NFCR2) de gestion de données d'application intégré ou destiné à être intégré dans un objet portatif, et prévu pour former avec un ou plusieurs processeur(s) hôte(s) (HP1, HP2, HP3) un système de communication de type NFC embarqué dans l'objet portatif, comprenant une interface (CLINT) d'émission/réception de données sans contact de type NFC et un processeur de routage ou de transfert de données (NFCC2, HCIADM, DTGEN) pour réaliser des actions de routage ou de transfert de données d'application entre l'interface d'émission/ réception de données sans contact et le(s) processeur(s) hôte (HP1-HP3),
**caractérisé en ce que** le processeur de routage ou de transfert de données est configuré pour :
- générer, au sein du système NFC, en réponse à la réalisation d'un événement interne (EVT, REQj) au sein du système NFC, des données d'application internes (DATA3) formant une commande exécutable par le processeur hôte auquel elles sont destinées, et
- fournir les données d'application internes (DATA3) à un processeur hôte du système NFC.

10. Dispositif selon la revendication 9, dans lequel le processeur de routage ou de transfert de données est configuré pour générer les données d'application internes dans un format déterminé (NDEF) pour simuler des données qui seraient lues dans ou fournies par un composant externe (EXTD) via un canal de communication sans contact.

11. Dispositif selon l'une des revendications 9 ou 10, dans lequel le processeur de routage ou de transfert de données est configuré pour :
- recevoir un signal d'horloge (CLK),
- générer un événement interne (EVT) à partir du signal d'horloge, et
- en réponse à la survenance de l'événement interne, fournir les données d'application internes (DATA3) à un processeur hôte du système NFC.

12. Dispositif selon l'une des revendications 9 ou 10, dans lequel le processeur de routage ou de transfert de données est configuré pour :
- recevoir une requête interne (REQj) valant événement interne de la part d'un premier processeur hôte du système NFC, et
- en réponse à la réception de la requête, fournir les données d'application internes (DATA3) à un second processeur hôte du système NFC.

13. Dispositif selon l'une des revendications 9 à 12, dans lequel le processeur de routage ou de transfert de données est configuré pour générer des données d'application internes (DATA3) comprenant ou formant une clé de sécurité.

14. Dispositif selon l'une des revendications 9 à 13, dans lequel le processeur de routage ou de transfert de données est configuré pour générer des données d'application internes (DATA3) qui simulent une commande RFID.

15. Dispositif selon l'une des revendications 9 à 14, dans lequel le processeur de routage ou de transfert de données est configuré pour générer des données d'application internes (DATA3) au moyen d'une fonction de cryptographie (AUTHCT).

16. Système NFC (NFCS2) comprenant un dispositif de gestion de données d'application selon l'une des revendications 9 à 15 et au moins un processeur hôte (HP1-HP3) connecté au dispositif.

17. Objet portatif électronique, notamment téléphone portable, comprenant un système NFC selon la revendication 16.

## Claims

1. Method for managing application data (DATA1, DATA2, DATA3) in a NFC system embedded or to be embedded in a portable object and comprising a contactless data sending/receiving interface (CLINT), one or more host processors (HP1, HP2, HP3), and a data routing or transferring processor (NFCC2, HCIADM, DTGEN) to perform actions of routing or of transferring application data between the contactless data sending/receiving interface and the host processor(s) (HP1-HP3), the method **characterized in that** it comprises the steps of:
- in response to the occurrence of an internal event (EVT, REQj) within the NFC system, generating internal application data (DATA3) forming a command executable by the host processor to which they are supplied; and
- supplying the internal application data to a host processor of the NFC system.

2. Method according to claim 1, wherein the internal application data are generated in a determined format (NDEF) to simulate data that may be read in or supplied by an external component (EXTD) via a contactless communication channel.

3. Method according to one of claims 1 or 2, comprising the steps of:
- receiving a clock signal (CLK);
- generating an internal event (EVT) from the clock signal; and
- in response to the occurrence of the internal event, supplying the internal application data (DATA3) to a host processor of the NFC system.

4. Method according to one of claims 1 or 2, comprising the steps of:
- configuring a first host processor of the NFC system so that it emits an internal request (REQj) serving as an internal event; and
- in response to the emission of the request, supplying the internal application data (DATA3) to a second host processor of the NFC system.

5. Method according to one of claims 1 to 4, comprising the step of sending internal application data (DATA3) to an external server (EXTSVR), by the host processor to which they were supplied.

6. Method according to one of claims 1 to 5, wherein the internal application data (DATA3) comprise or form a security key.

7. Method according to one of claims 1 to 6, wherein the internal application data (DATA3) simulate a RFID command.

8. Method according to one of claims 1 to 7, comprising the step of generating the internal application data (DATA3) using an encryption function (AUTHCT).

9. Device (NFCR2) for managing application data integrated or to be integrated in a portable object, and provided to form with one or more host processors (HP1, HP2, HP3) a communication system of NFC type embedded in the portable object, comprising a contactless data sending/receiving interface (CLINT) of NFC type and a data routing or transferring processor (NFCC2, HCIADM, DTGEN) to perform actions of routing or of transferring application data between the contactless data sending/receiving interface and the host processor(s) (HP1-HP3);
**characterized in that** the data routing or transferring processor is configured to:
- generate, within the NFC system, in response to the occurrence of an internal event (EVT, REQj) within the NFC system, internal application data (DATA3) forming a command executable by the host processor to which they are supplied; and
- supply the internal application data (DATA3) to a host processor of the NFC system.

10. Device according to claim 9, wherein the data routing or transferring processor is configured to generate the internal application data in a determined format (NDEF) to simulate data that will be read in or supplied by an external component (EXTD) via a contactless communication channel.

11. Device according to one of claims 9 or 10, wherein the data routing or transferring processor is configured to:
- receive a clock signal (CLK);
- generate an internal event (EVT) from the clock signal; and
- in response to the occurrence of the internal event, supply the internal application data (DATA3) to a host processor of the NFC system.

12. Device according to one of claims 9 or 10, wherein the data routing or transferring processor is configured to:
- receive an internal request (REQj) serving as an internal event from a first host processor of the NFC system;
- in response to the reception of the request, supply the internal application data (DATA3) to a second host processor of the NFC system.

13. Device according to one of claims 9 to 12, wherein the data routing or transferring processor is configured to generate internal application data (DATA3) comprising or forming a security key.

14. Device according to one of claims 9 to 13, wherein the data routing or transferring processor is configured to generate internal application data (DATA3) that simulate an RFID command.

15. Device according to one of claims 9 to 14, wherein the data routing or transferring processor is configured to generate internal application data (DATA3) by means of an encryption function (AUTHCT).

16. NFC system (NFCS2) comprising a device for managing application data according to one of claims 9 to 15 and at least one host processor (HP1-HP3) connected to the device.

17. Electronic portable object, mobile phone in particular, comprising a NFC system according to claim 16.

## Patentansprüche

1. Verfahren zur Verwaltung von Anwendungsdaten in einem NFC-System, das in ein tragbaren Objekt mitgeführt wird oder dazu bestimmt ist, mitgeführt zu werden, und umfassend eine kontaktlose Datensende-/Empfangsschnittstelle (CLINT), einen oder mehrere Host(s)-Prozessor(en) (HP1, HP2, HP3) und einen Routing- oder Datenübertragungs-Prozessor (NFCC2, HCIADM, DTGEN), um Aktionen für das Routing oder Übertragen von Anwendungsdaten zwischen der kontaktlosen Datensende-/Empfangsschnittstelle und dem(n) Host(s)-Prozessor(en) (HP1-HP3) zu realisieren, wobei das Verfahren **dadurch gekennzeichnet ist, dass** es Schritte umfasst, die Folgendes beinhalten:
- als Antwort auf die Realisierung eines internen Ereignisses (EVT, REQj) im NFC-System, interne Anwendungsdaten (DATA3) generieren, die einen Befehl bilden, der von einem Host-Prozessor, für den sie bestimmt sind, ausführbar ist, und
- einem Host-Prozessor des NFC-Systems die internen Anwendungsdaten (DATA3) liefern.

2. Verfahren nach Anspruch 1, in dem die internen Anwendungsdaten in einem bestimmten Format (NDEF) generiert sind, um Daten zu simulieren, die über einen kontaktlosen Kommunikationskanal in einer externen Komponente (EXTD) gelesen oder von ihr geliefert werden.

3. Verfahren nach einem der Ansprüche 1 oder 2, das Schritte umfasst, die Folgendes beinhalten:
- ein Taktsignal (CLK) empfangen,
- anhand des Taktsignals ein internes Ereignis (EVT) generieren, und
- als Antwort auf das Auftreten des internen Ereignisses, einem Host-Prozessor des NFC-Systems die internen Anwendungsdaten (DATA3) liefern.

4. Verfahren nach einem der Ansprüche 1 oder 2, das Schritte umfasst, die Folgendes beinhalten:
- einen ersten Host-Prozessor des NFC-Systems konfigurieren, damit er eine interne Abfrage (REQj), die als internes Ereignis gilt, ausgibt, und
- als Antwort auf die Ausgabe der Abfrage, einem zweiten Host-Prozessor des NFC-Systems die internen Anwendungsdaten (DATA3) liefern.

5. Verfahren nach einem der Ansprüche 1 bis 4, umfassend einen Schritt des Versands der internen Anwendungsdaten (DATA3) an einen externen Server (EXTSVR), über den Host-Prozessor, dem sie geliefert wurden.

6. Verfahren nach einem der Ansprüche 1 bis 5, in dem die internen Anwendungsdaten (DATA3) einen Sicherheitsschlüssel umfassen oder bilden.

7. Verfahren nach einem der Ansprüche 1 bis 6, in dem die internen Anwendungsdaten (DATA3) einen RFID-Befehl simulieren.

8. Verfahren nach einem der Ansprüche 1 bis 7, umfassend den Schritt, der darin besteht, die internen Anwendungsdaten (DATA3) mit Hilfe einer kryptografischen Funktion (AUTHCT) zu generieren.

9. Vorrichtung (NFCR2) zur Verwaltung von Anwendungsdaten, die in einem tragbaren Objekt integriert ist oder dazu bestimmt ist, integriert zu werden, und die vorgesehen ist, um mit einem oder mehreren Host (s) -Prozessor (en) (HP1, HP2, HP3) ein Kommunikationssystem des Typs NFC zu bilden, das im tragbaren Objekt mitgeführt wird, umfassend eine kontaktlose Datensende-/Empfangsschnittstelle (CLINT) des Typs NFC und einen Prozessor für das Routing oder Übertragen von Daten (NFCC2, HCIADM, DTGEN), um Aktionen für das Routing oder Übertragen von Anwendungsdaten zwischen der kontaktlosen Datensende-/Empfangsschnittstelle und dem(n) Host(s)-Prozessor(en) (HP1-HP3) zu realisieren,
**dadurch gekennzeichnet, dass** der Prozessor dazu konfiguriert ist, um
- im NFC-System als Antwort auf die Realisierung eines internen Ereignisses (EVT, REQj) im NFC-System interne Anwendungsdaten (DATA3) zu generieren, die einen Befehl bilden, der von dem Host-Prozessor, für den sie bestimmt sind, ausführbar ist, und
- einem Host-Prozessor des NFC-Systems die internen Anwendungsdaten (DATA3) zu liefern.

10. Vorrichtung nach Anspruch 9, in dem der Routing- oder Datenübertragungs-Prozessor konfiguriert ist, um die internen Anwendungsdaten in einem bestimmten Format (NDEF) zu generieren, um Daten zu simulieren, die über einen kontaktlosen Kommunikationskanal in einer externen Komponente (EXTD) gelesen oder von ihr geliefert werden.

11. Vorrichtung nach einem der Ansprüche 9 oder 10, in dem der Routing- oder Datenübertragungs-Prozessor konfiguriert ist, um
- ein Taktsignal (CLK) zu empfangen,
- anhand des Taktsignals ein internes Ereignis (EVT) zu generieren, und
- als Antwort auf das Auftreten des internen Ereignisses, einem Host-Prozessor des NFC-Systems die internen Anwendungsdaten (DATA3) zu liefern.

12. Vorrichtung nach einem der Ansprüche 9 oder 10, in der der Prozessor konfiguriert ist, um
- eine interne Abfrage (REQj) zu empfangen, die als internes Ergebnis von einem ersten Host-Prozessor des NFC-Systems gilt, und
- als Antwort auf den Empfang der Abfrage, einem zweiten Host-Prozessor des NFC-Systems die internen Anwendungsdaten (DATA3) zu liefern.

13. Vorrichtung nach einem der Ansprüche 9 bis 12, in dem der Prozessor konfiguriert ist, um interne Anwendungsdaten (DATA3), die einen Sicherheitsschlüssel umfassen oder bilden, zu generieren.

14. Vorrichtung nach einem der Ansprüche 9 bis 13, in dem der Prozessor konfiguriert ist, um interne Anwendungsdaten (DATA3), die einen RFID-Befehl simulieren, zu generieren.

15. Vorrichtung nach einem der Ansprüche 9 bis 14, in dem der Prozessor konfiguriert ist, um interne Anwendungsdaten (DATA3) mit Hilfe einer kryptografischen Funktion (AUTHCT) zu generieren.

16. NFC-System (NFCS2) umfassend eine Vorrichtung zur Verwaltung von Anwendungsdaten nach einem der Ansprüche 9 bis 15 und zumindest einen Host-Prozessor (HP1-HP3), der mit der Vorrichtung verbunden ist.

17. Elektronisches tragbares Objekt, insbesondere ein tragbares Telefon, umfassend ein NFC-System nach Anspruch 16.
